(19) Europäisches Patentamt
European Patent Office
Office européen des brevets

(11) **EP 4 716 348 A1**

(12) **EUROPEAN PATENT APPLICATION**
published in accordance with Art. 153(4) EPC

(43) Date of publication:
**25.03.2026 Bulletin 2026/13**

(21) Application number: **24824953.4**

(22) Date of filing: **25.03.2024**

(51) International Patent Classification (IPC):
**H04W 72/52** *(2023.01)*    **H04W 72/12** *(2023.01)*

(52) Cooperative Patent Classification (CPC):
**H04W 72/52; H04W 72/566; H04W 72/12**

(86) International application number:
**PCT/CN2024/083592**

(87) International publication number:
**WO 2024/260051 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.06.2023 CN 202310741809**

(71) Applicant: **Huawei Technologies Co., Ltd.
Shenzhen, Guangdong 518129 (CN)**

(72) Inventors:
• **WANG, Meng
Shenzhen, Guangdong 518129 (CN)**

• **CHEN, Xiang
Shenzhen, Guangdong 518129 (CN)**
• **HAN, Wei
Shenzhen, Guangdong 518129 (CN)**
• **ZHAO, Xiaoyu
Nanjing, Jiangsu 210096 (CN)**
• **ZHANG, Yingjun
Hong Kong, Sha Tin, New Territories Hong Kong (CN)**
• **WU, Jian
Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND RELATED DEVICE**

(57) This application provides a communication method and a related device, to schedule a signal of a terminal device based on a quantity of to-be-transmitted frames of the terminal device, to avoid, to some extent, a problem that the signal of the terminal device cannot be transmitted within a specified delay requirement, and improve user experience. In the method, a network device receives N pieces of first information, where the N pieces of first information are respectively used to determine quantities of to-be-transmitted frames of N terminal devices, and N is an integer greater than 1; and the network device sends signals to or receives signals from M terminal devices among the N terminal devices based on priorities of the N terminal devices, where the priorities of the N terminal devices are determined based on the quantities of to-be-transmitted frames of the N terminal devices, the signals of the M terminal devices are used to carry a part or all of to-be-transmitted frames of the M terminal devices, and M is an integer less than or equal to N.

FIG. 3

**Description**

This application claims priority to Chinese Patent Application No. 202310741809.9, filed with the China National Intellectual Property Administration on June 20, 2023, and entitled "COMMUNICATION METHOD AND RELATED DEVICE", which is incorporated herein by reference in its entirety.

**TECHNICAL FIELD**

This application relates to the field of communication technologies, and in particular, to a communication method and a related device.

**BACKGROUND**

In a communication system, a network device may determine priorities of terminal devices according to a scheduling algorithm, and send signals to or receive signals from the terminal devices based on the priorities. Based on optimization of the scheduling algorithm, network services can be provided for more terminal devices by using limited communication resources, to increase a system capacity.

Currently, in the scheduling algorithm, parameters such as quality of a channel between a terminal device and the network device and/or a historical transmission rate of the terminal device may be considered. For example, higher channel quality corresponding to a terminal device indicates a higher priority of the terminal device. For another example, a higher historical transmission rate corresponding to a terminal device indicates a lower priority of the terminal device. In this way, signals from different terminal devices show an alternate transmission characteristic from a macro perspective.

However, service data (for example, extended reality (extended reality, XR) service data) of a terminal device may have a time validity requirement. To be specific, the service data of the terminal device needs to be transmitted within a specified delay requirement. However, in the scheduling algorithm, to achieve fairness, signals from different terminal devices are alternately transmitted. Consequently, signals from a part or all of the terminal devices may not be transmitted within the specified delay requirement, affecting user experience.

**SUMMARY**

This application provides a communication method and a related device, to schedule a signal of a terminal device based on a quantity of to-be-transmitted frames of the terminal device, to avoid, to some extent, a problem that the signal of the terminal device cannot be transmitted within a specified delay requirement, and improve user experience.

A first aspect of this application provides a communication method. The method is performed by a network device, or the method is performed by some components (for example, a processor, a chip, or a chip system) in a network device, or the method may be implemented by a logic module or software that can implement all or a part of functions of a network device. In the first aspect and possible implementations of the first aspect, an example in which the communication method is performed by the network device is used for description. In the method, the network device receives N pieces of first information, where the N pieces of first information are respectively used to determine quantities of to-be-transmitted frames of N terminal devices, and N is an integer greater than 1; and the network device sends signals to or receives signals from M terminal devices among the N terminal devices based on priorities of the N terminal devices, where the priorities of the N terminal devices are determined based on the quantities of to-be-transmitted frames of the N terminal devices, the signals of the M terminal devices are used to carry a part or all of to-be-transmitted frames of the M terminal devices, and M is an integer less than or equal to N.

According to the foregoing technical solution, after the network device receives the N pieces of first information, the network device may respectively determine the quantities of to-be-transmitted frames of the N terminal devices based on the N pieces of first information. Then the network device may determine the priorities of the N terminal devices based on the quantities of to-be-transmitted frames of the N terminal devices, and send the signals to or receive the signals from the M terminal devices among the N terminal devices based on the priorities. In other words, the network device sends a signal to or receives a signal from a terminal device based on a quantity of to-be-transmitted frames of the terminal device, that is, the network device schedules the signal of the terminal device based on the quantity of to-be-transmitted frames of the terminal device. Because a quantity of to-be-transmitted frames of a terminal device is associated with time validity of service data of the terminal device, the network device schedules a signal of the terminal device based on the quantity of to-be-transmitted frames of the terminal device, to avoid, to some extent, a problem that the signal of the terminal device cannot be transmitted within a specified delay requirement, and improve user experience.

It should be understood that the to-be-transmitted frame (and an uplink frame, a downlink frame, or the like in the following descriptions) may include a video frame, an image frame, or the like.

Optionally, the to-be-transmitted frame may be to-be-transmitted information with time validity. To be specific, the to-be-transmitted information may vary greatly at different time. For example, if the to-be-transmitted information can be successfully received before a moment, a receiver of the to-be-transmitted information can process the to-be-transmitted information in a timely manner, and correspondingly, the to-be-transmitted information may be referred to as valid information; or if the to-be-transmitted information is not successfully received before the moment, the receiver of the to-be-transmitted information cannot process the to-be-transmitted information in a timely manner, and correspondingly, the to-be-transmitted information may be understood as invalid information. The to-be-transmitted frame may be replaced with other to-be-transmitted information with time validity, for example, neural network data or positioning data that is used to improve image quality or video quality in an XR scenario. Therefore, the foregoing technical solution can be applied to scheduling of other to-be-transmitted information with time validity.

It should be understood that, before transmission information of a terminal device starts to be transmitted, the transmission information of the terminal device may be to-be-transmitted information of the terminal device; and after transmission information of a terminal device is transmitted, the transmission information of the terminal device may include transmitted information and to-be-transmitted information.

Optionally, the transmitted information may be referred to as successfully transmitted information, successfully received information, or the like.

Optionally, the transmission information of the terminal device (or a terminal device corresponding to the to-be-transmitted frame) may have a frame satisfaction rate requirement, and the frame satisfaction rate requirement may indicate a proportion (or a coefficient, or the like). To be specific, when a frame successfully sent or received by the terminal device satisfies the proportion, transmission information sent or received by the terminal device meets the frame satisfaction rate requirement, and the terminal device may be referred to as a satisfied user.

Further, optionally, for downlink transmission, the network device may receive downlink transmission information of the N terminal devices from a service server or locally generate downlink transmission information of the N terminal devices. For the downlink transmission information of the N terminal devices, the network device may determine N first queues corresponding to the N terminal devices (because information in the first queue is specifically service information that is actually to be transmitted, the first queue may be referred to as a service queue). When the frame satisfaction rate requirement is considered, because the frame satisfaction rate requirement may be met if the network device successfully sends a specific proportion of frames, in other words, the network device may not need to send all frames, correspondingly, the network device may determine N first queues corresponding to the N terminal devices (because information in the second queue is specifically service information that is to be transmitted and that is simulated according to the frame satisfaction rate requirement, the second queue may be referred to as a virtual queue).

Further, optionally, for uplink transmission, for any one of the N terminal devices, the terminal device may receive uplink transmission information from another device or locally generate uplink transmission information of the terminal device. For the uplink transmission information of the terminal device, the terminal device may determine a first queue corresponding to the terminal device (because information in the first queue is specifically service information that is actually to be transmitted, the first queue may be referred to as a service queue). When the frame satisfaction rate requirement is considered, because the frame satisfaction rate requirement may be met if the terminal device successfully sends a specific proportion of frames, in other words, the terminal device may not need to send all frames, correspondingly, the terminal device may determine a second queue corresponding to the terminal device (because information in the second queue is specifically service information that is to be transmitted and that is simulated according to the frame satisfaction rate requirement, the second queue may be referred to as a virtual queue).

In other words, transmission information of a terminal device includes downlink transmission information on the network device and/or uplink transmission information on the terminal device, and a transmission queue to which the transmission information of the terminal device belongs may be a first queue or a second queue. For example, when the frame satisfaction rate requirement is not considered or a value of a proportion corresponding to the frame satisfaction rate requirement is 1, the transmission queue to which the transmission information belongs may be referred to as the first queue. For another example, when the frame satisfaction rate requirement is considered, the transmission queue to which the transmission information belongs may be referred to as the second queue.

It should be understood that, due to limited network resources, during implementation in which the network device sends the signals to or receives the signals from the M terminal devices among the N terminal devices based on the priorities of the N terminal devices, when a current network resource is less than a resource used to carry the N network devices, the network device may send the signals to the M terminal devices among the N terminal devices, and M is less than N; or when a current network resource is greater than or equal to a resource used to carry the N network devices, the network device may send signals to the N terminal devices.

In a possible implementation of the first aspect, the to-be-transmitted frames of the N terminal devices are downlink frames, and the N pieces of first information respectively indicate quantities of transmitted frames successfully received by the N terminal devices.

According to the foregoing technical solution, when the to-be-transmitted frames of the N terminal devices are downlink frames, the foregoing technical solution may be applied to a downlink transmission scenario. The N pieces of first information respectively indicate the quantities of transmitted frames successfully received by the N terminal devices, so that the network device can determine the quantities of to-be-transmitted frames of the N terminal devices based on the quantities of transmitted frames successfully received by the N terminal devices.

In a possible implementation of the first aspect, the first information includes at least one of a hybrid automatic repeat request acknowledgement (hybrid automatic repeat request acknowledgement, HARQ ACK), a hybrid automatic repeat request negative acknowledgement (hybrid automatic repeat request negative acknowledgement, HARQ NACK), and frame satisfaction rate information, and the frame satisfaction rate information is determined based on a quantity of successfully received frames and a quantity of frames expected to be successfully received.

According to the foregoing technical solution, when the first information indicates a quantity of transmitted frames successfully received by a terminal device, the first information may include at least one of the foregoing, to improve flexibility of implementing the solution.

In a possible implementation of the first aspect, that the N pieces of first information are respectively used to determine the quantities of to-be-transmitted frames of the N terminal devices includes: The N pieces of first information and N pieces of second information are used to determine the quantities of to-be-transmitted frames of the N terminal devices, and the N pieces of second information respectively indicate service arrival rates of the N terminal devices and/or frame satisfaction rate requirements of the N terminal devices.

According to the foregoing technical solution, in a process in which the network device determines the quantities of to-be-transmitted frames of the N terminal devices based on the N pieces of first information, the network device may further use the N pieces of second information as one of bases for determining the quantities of to-be-transmitted frames of the N terminal devices. Therefore, the network device may determine total quantities of transmitted frames of the N terminal devices based on the service arrival rates of the N terminal devices and/or the frame satisfaction rates of the N terminal devices, and the network device may determine the quantities of to-be-transmitted frames based on the total quantities of transmitted frames and the quantities of successfully received transmitted frames that are indicated by the first information.

In a possible implementation of the first aspect, the to-be-transmitted frames of the N terminal devices are uplink frames, and the N pieces of first information respectively indicate the quantities of to-be-transmitted frames of the N terminal devices.

According to the foregoing technical solution, when the to-be-transmitted frames of the N terminal devices are uplink frames, the foregoing technical solution may be applied to an uplink transmission scenario. The N pieces of first information respectively indicate the quantities of to-be-transmitted frames of the N terminal devices, so that the network device can obtain the quantities of to-be-transmitted frames of the N terminal devices based on the N pieces of first information.

In a possible implementation of the first aspect, that the priorities of the N terminal devices are determined based on the quantities of to-be-transmitted frames of the N terminal devices includes: Sending priorities or receiving priorities of the N terminal devices are determined based on the quantities of to-be-transmitted frames of the N terminal devices, where the sending priorities or the receiving priorities of the N terminal devices are positively correlated with the quantities of to-be-transmitted frames of the N terminal devices.

According to the foregoing technical solution, in a process in which the network device sends signals to or receives signals from the N terminal devices, the network device may determine the sending priorities or the receiving priorities of the N terminal devices based on the quantities of to-be-transmitted frames of the N terminal devices. Larger quantities of to-be-transmitted frames of the N terminal devices indicate higher sending priorities or receiving priorities of the N terminal devices. On the contrary, smaller quantities of to-be-transmitted frames of the N terminal devices indicate lower sending priorities or receiving priorities of the N terminal devices. A larger quantity of to-be-transmitted frames of a terminal device indicates that a current frame satisfaction rate of the terminal device is lower (to be specific, a current to-be-transmitted frame of the terminal device is likely to become invalid). Therefore, in the foregoing technical solution, a signal of a terminal device with a larger quantity of to-be-transmitted frames can be preferentially sent or received, to improve user experience.

In a possible implementation of the first aspect, the sending priorities or the receiving priorities of the N terminal devices are positively correlated with spectral efficiency of the N terminal devices.

According to the foregoing technical solution, in a process in which the network device sends signals to or receives signals from the N terminal devices, the network device may determine the sending priorities or the receiving priorities of the N terminal devices based on the spectral efficiency of the terminal devices. Higher spectral efficiency of the N terminal devices indicates higher sending priorities or receiving priorities of the N terminal devices. On the contrary, lower spectral efficiency of the N terminal devices indicates lower sending priorities or receiving priorities of the N terminal devices. Higher spectral efficiency of a terminal device indicates that current communication quality of the terminal device is higher. Therefore, in the foregoing technical solution, a signal of a terminal device with higher spectral efficiency can be preferentially sent or received, to improve utilization of system resources.

Optionally, spectral efficiency of a terminal device may be determined based on channel quality information of the terminal device (or a value of the spectral efficiency may be a value of the channel quality information). The channel quality information may include a received signal strength indicator (received signal strength indicator, RSSI), reference signal received power (reference signal received power, RSRP), reference signal received quality (reference signal received quality, RSRQ), or the like.

In a possible implementation of the first aspect, a sending priority or a receiving priority $p_{i,1}$ of an $i^{th}$ terminal device among the N terminal devices satisfies:

$$p_{i,1} = c_i * f\left(\frac{r_i - \bar{R}}{\bar{R}^\alpha}\right);$$

or

$$p_{i,1} = \frac{c_i}{\bar{c_i}} * f\left(\frac{r_i - \bar{R}}{\bar{R}^\alpha}\right),$$

where

$c_i$ indicates spectral efficiency of the $i^{th}$ terminal device, $\bar{c_i}$ indicates historical average spectral efficiency of the $i^{th}$ terminal device, $r_i$ indicates a quantity of to-be-transmitted frames of the $i^{th}$ terminal device, $\bar{R}$ indicates an average value of the quantities of to-be-transmitted frames of the N terminal devices, $\alpha$ is an optimization parameter, and $f\left(\frac{r_i - \bar{R}}{\bar{R}^\alpha}\right)$ indicates a monotonically increasing function with respect to $\frac{r_i - \bar{R}}{\bar{R}^\alpha}$.

According to the foregoing technical solution, the sending priority or the receiving priority of the $i^{th}$ terminal device among the N terminal devices may be implemented in the foregoing manner, to provide a specific implementation of determining the priority.

Optionally, the foregoing formula mainly includes a process of calculating a priority of a frame. Correspondingly, the foregoing technical solution may be referred to as a frame priority calculation process.

Optionally, the sending priority or the receiving priority of the $i^{th}$ terminal device among the N terminal devices may alternatively be determined in another manner. For example, equivalent transformation is performed on the foregoing formula, or some parameters are added to or removed from the foregoing formula (for example, bandwidth used by the terminal device is added, or the spectral efficiency is removed). This is not limited herein.

In a possible implementation of the first aspect, that the priorities of the N terminal devices are determined based on the quantities of to-be-transmitted frames of the N terminal devices includes: The priorities of the N terminal devices are determined based on the quantities of to-be-transmitted frames of the N terminal devices and first-packet wait duration of the to-be-transmitted frames of the N terminal devices. The method further includes: The network device receives N pieces of third information, where the N pieces of third information are respectively used to determine the first-packet wait duration of the to-be-transmitted frames of the N terminal devices.

According to the foregoing technical solution, in a process in which the network device sends signals to or receives signals from the N terminal devices, the network device may determine the sending priorities or the receiving priorities of the N terminal devices based on the first-packet wait duration of the to-be-transmitted frames. Longer first-packet wait duration of the to-be-transmitted frames of the N terminal devices indicates higher sending priorities or receiving priorities of the N terminal devices. On the contrary, shorter spectral efficiency of the N terminal devices indicates lower sending priorities or receiving priorities of the N terminal devices. Longer first-packet wait duration of a to-be-transmitted frame indicates that a current frame satisfaction rate of the terminal device is lower (to be specific, a current to-be-transmitted frame of the terminal device is likely to become invalid). Therefore, in the foregoing technical solution, a signal of a terminal device that has a to-be-transmitted frame with longer first-packet wait duration can be preferentially sent or received, to improve user experience.

In a possible implementation of the first aspect, the to-be-transmitted frames of the N terminal devices are downlink frames, and the N pieces of third information respectively indicate arrival moments of the to-be-transmitted frames of the N terminal devices; and/or the to-be-transmitted frames of the N terminal devices are uplink frames, and the N pieces of third information respectively indicate the first-packet wait duration of the to-be-transmitted frames of the N terminal devices.

According to the foregoing technical solution, the third information used to determine the first-packet wait duration of the to-be-transmitted frames of the N terminal devices may be determined in the foregoing plurality of manners, to provide implementations of determining the third information in different scenarios.

In a possible implementation of the first aspect, that the priorities of the N terminal devices are determined based on the quantities of to-be-transmitted frames of the N terminal devices and the first-packet wait duration of the to-be-transmitted frames of the N terminal devices includes: Sending priorities or receiving priorities of the N terminal devices are determined based on the quantities of to-be-transmitted frames of the N terminal devices and the first-packet wait duration of the to-be-transmitted frames of the N terminal devices, where the sending priorities or the receiving priorities of the N terminal devices are positively correlated with the quantities of to-be-transmitted frames of the N terminal devices, and the sending priorities or the receiving priorities of the N terminal devices are positively correlated with lengths of the first-packet wait duration of the to-be-transmitted frames of the N terminal devices.

According to the foregoing technical solution, in a process in which the network device sends signals to or receives signals from the N terminal devices, the network device may determine the sending priorities or the receiving priorities of the N terminal devices based on the quantities of to-be-transmitted frames and the first-packet wait duration of the to-be-transmitted frames. Therefore, in the foregoing technical solution, a signal of a terminal device that has a to-be-transmitted frame with longer first-packet wait duration can be preferentially sent or received, and a signal of a terminal device with a larger quantity of to-be-transmitted frames can be preferentially sent or received, to improve user experience and improve utilization of system resources.

In a possible implementation of the first aspect, a sending priority or a receiving priority $p_i$ of an $i^{th}$ terminal device among the N terminal devices satisfies:

$$p_i = c_i * f\left(\frac{r_i - \overline{R}}{\overline{R}^\alpha}\right) + c_i * f\left(\frac{W_i - \overline{W}}{\overline{W}^\alpha}\right);$$

or

$$p_i = \frac{c_i}{\overline{c_1}} * f\left(\frac{r_i - \overline{R}}{\overline{R}^\alpha}\right) + \frac{c_i}{\overline{c_1}} * f\left(\frac{W_i - \overline{W}}{\overline{W}^\alpha}\right),$$

where

$c_i$ indicates spectral efficiency of the $i^{th}$ terminal device, $\overline{c_1}$ indicates historical average spectral efficiency of the $i^{th}$ terminal device, $r_i$ indicates a quantity of to-be-transmitted frames of the $i^{th}$ terminal device, $\overline{R}$ indicates an average value of the quantities of to-be-transmitted frames of the N terminal devices, $\alpha$ is an optimization parameter, $W_i$ indicates first-packet wait duration of the to-be-transmitted frames of the $i^{th}$ terminal device, $\overline{W}$ indicates an average value of first-packet wait duration of to-be-transmitted frames of an $N^{th}$ terminal device, $f\left(\frac{r_i - \overline{R}}{\overline{R}^\alpha}\right)$ indicates a monotonically increasing function with respect to $\frac{r_i - \overline{R}}{\overline{R}^\alpha}$, and $f\left(\frac{W_i - \overline{W}}{\overline{W}^\alpha}\right)$ indicates a monotonically increasing function with respect to $\frac{W_i - \overline{W}}{\overline{W}^\alpha}$.

According to the foregoing technical solution, the sending priority or the receiving priority of the $i^{th}$ terminal device among the N terminal devices may be implemented in the foregoing manner, to provide a specific implementation of determining the priority.

Optionally, the foregoing formula includes a process of calculating a priority of a first packet. Correspondingly, the foregoing technical solution may be referred to as a packet priority calculation process.

Optionally, the sending priority or the receiving priority of the $i^{th}$ terminal device among the N terminal devices may alternatively be determined in another manner. For example, equivalent transformation is performed on the foregoing formula, or some parameters are added to or removed from the foregoing formula (for example, bandwidth used by the terminal device is added, or the spectral efficiency is removed). This is not limited herein.

In a possible implementation of the first aspect, the M terminal devices are included in K terminal devices among the N terminal devices, and K is greater than or equal to M. Before the network device sends the signals to or receives the signals from the M terminal devices among the N terminal devices based on the priorities of the N terminal devices, the method further includes: The network device determines the K terminal devices based on the quantities of to-be-transmitted frames of the N terminal devices and fourth information, where the fourth information indicates a threshold of a quantity of to-be-transmitted frames.

According to the foregoing technical solution, after filtering the N terminal devices based on the threshold indicated by the fourth information to obtain the K terminal devices, the network device may determine the M terminal devices from the K terminal devices based on the first information. Quantities of to-be-transmitted frames of some terminal devices among the quantities of to-be-transmitted frames of the N terminal devices being greater than the threshold indicated by the fourth information indicates that a quantity of terminal devices currently accessing the network device is greater than a quantity of users that can be supported by a system capacity. The foregoing filtering process performed based on the fourth information can prevent an excessively large quantity of users or an excessively poor user from accessing a system, to avoid impact on overall transmission of users, and increase the system capacity.

Optionally, the foregoing formula mainly includes a calculation process for filtering terminal devices. Correspondingly, the foregoing technical solution may be referred to as a user admission calculation process.

In a possible implementation of the first aspect, determining the K terminal devices based on the quantities of to-be-transmitted frames of the N terminal devices and the fourth information includes: when a quantity of terminal devices, among the N terminal devices, whose quantities of to-be-transmitted frames are greater than the threshold is greater than or equal to a first threshold, excluding, from the N terminal devices, N-K terminal devices whose quantities of transmitted frames are ranked in the top N-K, to determine the K terminal devices; and/or when a quantity of terminal devices, among the N terminal devices, whose quantities of to-be-transmitted frames are greater than the threshold is less than or equal to a second threshold, determining the N terminal devices as the K terminal devices.

Optionally, the first threshold is greater than or equal to the second threshold.

According to the foregoing technical solution, the terminal device may implement a process of filtering the N terminal devices based on the threshold indicated by the fourth information, and may determine the K terminal devices from the N terminal devices in the foregoing plurality of manners.

Optionally, a difference between N and K is 1, or a difference between N and K is greater than 1.

A second aspect of this application provides a communication method. The method is performed by a terminal device, or the method is performed by some components (for example, a processor, a chip, or a chip system) in a first terminal device, or the method may be implemented by a logic module or software that can implement all or a part of functions of a terminal device. In the second aspect and possible implementations of the second aspect, an example in which the communication method is performed by the first terminal device is used for description. In the method, the first terminal device determines first information, where the first information is used to determine a quantity of to-be-transmitted frames of the first terminal device, the first terminal device is included in N terminal devices, and priorities of the N terminal devices are determined based on quantities of to-be-transmitted frames of the N terminal devices; and the first terminal device sends the first information.

According to the foregoing technical solution, the first information sent by the first terminal device is used to determine the quantity of to-be-transmitted frames of the first terminal device, and the first terminal device is included in the N terminal devices, so that a network device can determine the priorities of the N terminal devices based on the quantities of to-be-transmitted frames of the N terminal devices, and send signals to or receive signals from M terminal devices among the N terminal devices based on the priorities. In other words, the network device sends a signal to or receives a signal from a terminal device based on a quantity of to-be-transmitted frames of the terminal device, that is, the network device schedules the signal of the terminal device based on the quantity of to-be-transmitted frames of the terminal device. Because a quantity of to-be-transmitted frames of a terminal device is associated with time validity of service data of the terminal device, the network device schedules a signal of the terminal device based on the quantity of to-be-transmitted frames of the terminal device, to avoid, to some extent, a problem that the signal of the terminal device cannot be transmitted within a specified delay requirement, and improve user experience.

In a possible implementation of the second aspect, the to-be-transmitted frames of the first terminal device are downlink frames, and the first information indicates a quantity of transmitted frames successfully received by the first terminal device.

According to the foregoing technical solution, when the to-be-transmitted frames of the N terminal devices are downlink frames, the foregoing technical solution may be applied to a downlink transmission scenario. N pieces of first information respectively indicate quantities of transmitted frames successfully received by the N terminal devices, so that the network device can determine the quantities of to-be-transmitted frames of the N terminal devices based on the quantities of transmitted frames successfully received by the N terminal devices.

In a possible implementation of the second aspect, the first information includes at least one of a hybrid automatic repeat request acknowledgement HARQ ACK, a hybrid automatic repeat request negative acknowledgement HARQ NACK, and frame satisfaction rate information, and the frame satisfaction rate information is determined based on a quantity of successfully received frames and a quantity of frames expected to be successfully received.

According to the foregoing technical solution, when the first information indicates a quantity of transmitted frames successfully received by a terminal device, the first information may include at least one of the foregoing, to improve flexibility of implementing the solution.

In a possible implementation of the second aspect, the to-be-transmitted frames of the first terminal device are uplink frames, and the first information indicates the quantity of to-be-transmitted frames of the first terminal device.

According to the foregoing technical solution, when the to-be-transmitted frames of the N terminal devices are uplink frames, the foregoing technical solution may be applied to an uplink transmission scenario. N pieces of first information respectively indicate the quantities of to-be-transmitted frames of the N terminal devices, so that the network device can obtain the quantities of to-be-transmitted frames of the N terminal devices based on the N pieces of first information.

In a possible implementation of the second aspect, that the priorities of the N terminal devices are determined based on the quantities of to-be-transmitted frames of the N terminal devices includes: Sending priorities or receiving priorities of the N terminal devices are determined based on the quantities of to-be-transmitted frames of the N terminal devices, where the sending priorities or the receiving priorities of the N terminal devices are positively correlated with the quantities of to-be-transmitted frames of the N terminal devices.

According to the foregoing technical solution, in a process in which the network device sends signals to or receives signals from the N terminal devices, the network device may determine the sending priorities or the receiving priorities of the N terminal devices based on the quantities of to-be-transmitted frames of the N terminal devices. Larger quantities of to-be-transmitted frames of the N terminal devices indicate higher sending priorities or receiving priorities of the N terminal devices. On the contrary, smaller quantities of to-be-transmitted frames of the N terminal devices indicate lower sending priorities or receiving priorities of the N terminal devices. A larger quantity of to-be-transmitted frames of a terminal device indicates that a current frame satisfaction rate of the terminal device is lower (to be specific, a current to-be-transmitted frame of the terminal device is likely to become invalid). Therefore, in the foregoing technical solution, a signal of a terminal device with a larger quantity of to-be-transmitted frames can be preferentially sent or received, to improve user experience.

In a possible implementation of the second aspect, the sending priorities or the receiving priorities of the N terminal devices are positively correlated with spectral efficiency of the N terminal devices.

According to the foregoing technical solution, in a process in which the network device sends signals to or receives signals from the N terminal devices, the network device may determine the sending priorities or the receiving priorities of the N terminal devices based on the spectral efficiency of the terminal devices. Higher spectral efficiency of the N terminal devices indicates higher sending priorities or receiving priorities of the N terminal devices. On the contrary, lower spectral efficiency of the N terminal devices indicates lower sending priorities or receiving priorities of the N terminal devices. Higher spectral efficiency of a terminal device indicates that current communication quality of the terminal device is higher. Therefore, in the foregoing technical solution, a signal of a terminal device with higher spectral efficiency can be preferentially sent or received, to improve utilization of system resources.

Optionally, spectral efficiency of a terminal device may be determined based on channel quality information of the terminal device (or a value of the spectral efficiency may be a value of the channel quality information). The channel quality information may include a received signal strength indicator (received signal strength indicator, RSSI), reference signal received power (reference signal received power, RSRP), reference signal received quality (reference signal received quality, RSRQ), or the like.

In a possible implementation of the second aspect, that the priorities of the N terminal devices are determined based on the quantities of to-be-transmitted frames of the N terminal devices includes: The priorities of the N terminal devices are determined based on the quantities of to-be-transmitted frames of the N terminal devices and first-packet wait duration of the to-be-transmitted frames of the N terminal devices. The method further includes: The terminal device sends third information, where the third information is used to determine first-packet wait duration of the to-be-transmitted frames of the first terminal device.

According to the foregoing technical solution, in a process in which the network device sends signals to or receives signals from the N terminal devices, the network device may determine the sending priorities or the receiving priorities of the N terminal devices based on the first-packet wait duration of the to-be-transmitted frames. Longer first-packet wait duration of the to-be-transmitted frames of the N terminal devices indicates higher sending priorities or receiving priorities of the N terminal devices. On the contrary, shorter spectral efficiency of the N terminal devices indicates lower sending priorities or receiving priorities of the N terminal devices. Longer first-packet wait duration of a to-be-transmitted frame indicates that a current frame satisfaction rate of the terminal device is lower (to be specific, a current to-be-transmitted frame of the terminal device is likely to become invalid). Therefore, in the foregoing technical solution, a signal of a terminal device that has a to-be-transmitted frame with longer first-packet wait duration can be preferentially sent or received, to improve user experience.

In a possible implementation of the second aspect, the to-be-transmitted frames of the first terminal device are downlink frames, and the third information indicates arrival moments of the to-be-transmitted frames of the first terminal device; and/or the to-be-transmitted frames of the N terminal devices are uplink frames, and the third information indicates the first-packet wait duration of the to-be-transmitted frames of the first terminal device.

According to the foregoing technical solution, the third information used to determine the first-packet wait duration of the to-be-transmitted frames of the N terminal devices may be determined in the foregoing plurality of manners, to provide implementations of determining the third information in different scenarios.

In a possible implementation of the second aspect, that the priorities of the N terminal devices are determined based on the quantities of to-be-transmitted frames of the N terminal devices and the first-packet wait duration of the to-be-transmitted frames of the N terminal devices includes: Sending priorities or receiving priorities of the N terminal devices are determined based on the quantities of to-be-transmitted frames of the N terminal devices and the first-packet wait duration of the to-be-transmitted frames of the N terminal devices, where the sending priorities or the receiving priorities of the N terminal devices are positively correlated with the quantities of to-be-transmitted frames of the N terminal devices, and the sending priorities or the receiving priorities of the N terminal devices are positively correlated with lengths of the first-packet wait duration of the to-be-transmitted frames of the N terminal devices.

According to the foregoing technical solution, in a process in which the network device sends signals to or receives signals from the N terminal devices, the network device may determine the sending priorities or the receiving priorities of the N terminal devices based on the quantities of to-be-transmitted frames and the first-packet wait duration of the to-be-transmitted frames. Therefore, in the foregoing technical solution, a signal of a terminal device that has a to-be-transmitted frame with longer first-packet wait duration can be preferentially sent or received, and a signal of a terminal device with a larger quantity of to-be-transmitted frames can be preferentially sent or received, to improve user experience and improve utilization of system resources.

A third aspect of this application provides a communication apparatus. The communication apparatus may implement the method according to any one of the first aspect or the possible implementations of the first aspect. The communication apparatus includes a corresponding unit or module for performing the foregoing method. The unit or the module included in the communication apparatus may be implemented by using software and/or hardware. For example, the apparatus may be a network device, or the apparatus may be a component (for example, a processor, a chip, or a chip system) in a network device, or the apparatus may be a logic module or software that can implement all or a part of functions of a network device.

The communication apparatus includes a processing unit and a transceiver unit. The transceiver unit is configured to receive N pieces of first information, where the N pieces of first information are respectively used to determine quantities of to-be-transmitted frames of N terminal devices, and N is an integer greater than 1. The processing unit is configured to send signals to or receive signals from M terminal devices among the N terminal devices based on priorities of the N terminal devices, where the priorities of the N terminal devices are determined based on the quantities of to-be-transmitted frames of the N terminal devices, the signals of the M terminal devices are used to carry a part or all of to-be-transmitted frames of the M terminal devices, and M is an integer less than or equal to N.

In a possible implementation of the third aspect, the to-be-transmitted frames of the N terminal devices are downlink frames, and the N pieces of first information respectively indicate quantities of transmitted frames successfully received by the N terminal devices.

In a possible implementation of the third aspect, the first information includes at least one of a hybrid automatic repeat request acknowledgement HARQ ACK, a hybrid automatic repeat request negative acknowledgement HARQ NACK, and frame satisfaction rate information, and the frame satisfaction rate information is determined based on a quantity of successfully received frames and a quantity of frames expected to be successfully received.

In a possible implementation of the third aspect, that the N pieces of first information are respectively used to determine the quantities of to-be-transmitted frames of the N terminal devices includes: The N pieces of first information and N pieces of second information are used to determine the quantities of to-be-transmitted frames of the N terminal devices, and the N pieces of second information respectively indicate service arrival rates of the N terminal devices and/or frame satisfaction rate requirements of the N terminal devices.

In a possible implementation of the third aspect, the to-be-transmitted frames of the N terminal devices are uplink frames, and the N pieces of first information respectively indicate the quantities of to-be-transmitted frames of the N terminal devices.

In a possible implementation of the third aspect, that the priorities of the N terminal devices are determined based on the quantities of to-be-transmitted frames of the N terminal devices includes: Sending priorities or receiving priorities of the N terminal devices are determined based on the quantities of to-be-transmitted frames of the N terminal devices, where the sending priorities or the receiving priorities of the N terminal devices are positively correlated with the quantities of to-be-transmitted frames of the N terminal devices.

In a possible implementation of the third aspect, the sending priorities or the receiving priorities of the N terminal devices are positively correlated with spectral efficiency of the N terminal devices.

In a possible implementation of the third aspect, a sending priority or a receiving priority $p_{i,1}$ of an $i^{th}$ terminal device among the N terminal devices satisfies:

$$p_{i,1} = c_i * f\left(\frac{r_i - \overline{R}}{\overline{R}^\alpha}\right);$$

or

$$p_{i,1} = \frac{c_i}{\overline{c_i}} * f\left(\frac{r_i - \overline{R}}{\overline{R}^\alpha}\right)$$

, where

$c_i$ indicates spectral efficiency of the $i^{th}$ terminal device, $\overline{c_1}$ indicates historical average spectral efficiency of the $i^{th}$ terminal device, $r_i$ indicates a quantity of to-be-transmitted frames of the $i^{th}$ terminal device, $\overline{R}$ indicates an average value of the quantities of to-be-transmitted frames of the N terminal devices, $\alpha$ is an optimization parameter, and $f\left(\frac{r_i - \overline{R}}{\overline{R}^\alpha}\right)$ indicates a monotonically increasing function with respect to $\frac{r_i - \overline{R}}{\overline{R}^\alpha}$ .

In a possible implementation of the third aspect, that the priorities of the N terminal devices are determined based on the quantities of to-be-transmitted frames of the N terminal devices includes: The priorities of the N terminal devices are determined based on the quantities of to-be-transmitted frames of the N terminal devices and first-packet wait duration of the to-be-transmitted frames of the N terminal devices. The transceiver unit is further configured to receive N pieces of third information, where the N pieces of third information are respectively used to determine the first-packet wait duration of the to-be-transmitted frames of the N terminal devices.

In a possible implementation of the third aspect, the to-be-transmitted frames of the N terminal devices are downlink frames, and the N pieces of third information respectively indicate arrival moments of the to-be-transmitted frames of the N terminal devices; and/or the to-be-transmitted frames of the N terminal devices are uplink frames, and the N pieces of third information respectively indicate the first-packet wait duration of the to-be-transmitted frames of the N terminal devices.

In a possible implementation of the third aspect, that the priorities of the N terminal devices are determined based on the quantities of to-be-transmitted frames of the N terminal devices and the first-packet wait duration of the to-be-transmitted frames of the N terminal devices includes: Sending priorities or receiving priorities of the N terminal devices are determined based on the quantities of to-be-transmitted frames of the N terminal devices and the first-packet wait duration of the to-be-transmitted frames of the N terminal devices, where the sending priorities or the receiving priorities of the N terminal devices are positively correlated with the quantities of to-be-transmitted frames of the N terminal devices, and the sending priorities or the receiving priorities of the N terminal devices are positively correlated with lengths of the first-packet wait duration of the to-be-transmitted frames of the N terminal devices.

In a possible implementation of the third aspect, the sending priorities or the receiving priorities of the N terminal devices are positively correlated with spectral efficiency of the N terminal devices.

In a possible implementation of the third aspect, a sending priority or a receiving priority $p_i$ of an $i^{th}$ terminal device among the N terminal devices satisfies:

$$p_i = c_i * f\left(\frac{r_i - \overline{R}}{\overline{R}^\alpha}\right) + c_i * f\left(\frac{W_i - \overline{W}}{\overline{W}^\alpha}\right);$$

or

$$p_i = \frac{c_i}{\overline{c_1}} * f\left(\frac{r_i - \overline{R}}{\overline{R}^\alpha}\right) + \frac{c_i}{\overline{c_1}} * f\left(\frac{W_i - \overline{W}}{\overline{W}^\alpha}\right),$$

where

$c_i$ indicates spectral efficiency of the $i^{th}$ terminal device, $\overline{c_1}$ indicates historical average spectral efficiency of the $i^{th}$ terminal device, $r_i$ indicates a quantity of to-be-transmitted frames of the $i^{th}$ terminal device, $\overline{R}$ indicates an average value of the quantities of to-be-transmitted frames of the N terminal devices, $\alpha$ is an optimization parameter, $W_i$ indicates first-packet wait duration of the to-be-transmitted frames of the $i^{th}$ terminal device, $\overline{W}$ indicates an average value of first-packet wait duration of to-be-transmitted frames of an $N^{th}$ terminal device, $f\left(\frac{r_i - \overline{R}}{\overline{R}^\alpha}\right)$ indicates a monotonically increasing function with respect to $\frac{r_i - \overline{R}}{\overline{R}^\alpha}$, and $f\left(\frac{W_i - \overline{W}}{\overline{W}^\alpha}\right)$ indicates a monotonically increasing function with respect to $\frac{W_i - \overline{W}}{\overline{W}^\alpha}$.

In a possible implementation of the third aspect, the M terminal devices are included in K terminal devices among the N terminal devices, and K is greater than or equal to M. The processing unit is further configured to determine the K terminal devices based on the quantities of to-be-transmitted frames of the N terminal devices and fourth information, where the fourth information indicates a threshold of a quantity of to-be-transmitted frames.

In a possible implementation of the third aspect, the processing unit is specifically configured to: when a quantity of terminal devices, among the N terminal devices, whose quantities of to-be-transmitted frames are greater than the threshold is greater than or equal to a first threshold, exclude, from the N terminal devices, N-K terminal devices whose quantities of transmitted frames are ranked in the top N-K, to determine the K terminal devices; and/or the processing unit is specifically configured to: when a quantity of terminal devices, among the N terminal devices, whose quantities of to-be-transmitted frames are greater than the threshold is less than or equal to a second threshold, determine the N terminal devices as the K terminal devices.

In a possible implementation of the third aspect, a difference between N and K is 1.

In the third aspect, the processing unit and the transceiver unit may alternatively be configured to perform the steps performed in the possible implementations of the first aspect, and achieve corresponding technical effects. For details, refer to the first aspect. Details are not described herein again.

A fourth aspect of this application provides a communication apparatus. The communication apparatus may implement the method according to any one of the second aspect or the possible implementations of the second aspect.

The communication apparatus includes a corresponding unit or module for performing the foregoing method. The unit or the module included in the communication apparatus may be implemented by using software and/or hardware. For example, the apparatus may be a terminal device, or the apparatus may be a component (for example, a processor, a chip, or a chip system) in a terminal device, or the apparatus may be a logic module or software that can implement all or a part of functions of a terminal device.

The apparatus includes a processing unit and a transceiver unit. The processing unit is configured to determine first information, where the first information is used to determine a quantity of to-be-transmitted frames of a first terminal device, the first terminal device is included in N terminal devices, and priorities of the N terminal devices are determined based on quantities of to-be-transmitted frames of the N terminal devices. The transceiver unit is configured to send the first information.

In a possible implementation of the fourth aspect, the to-be-transmitted frames of the first terminal device are downlink frames, and the first information indicates a quantity of transmitted frames successfully received by the first terminal device.

In a possible implementation of the fourth aspect, the first information includes at least one of a hybrid automatic repeat request acknowledgement HARQ ACK, a hybrid automatic repeat request negative acknowledgement HARQ NACK, and frame satisfaction rate information, and the frame satisfaction rate information is determined based on a quantity of successfully received frames and a quantity of frames expected to be successfully received.

In a possible implementation of the fourth aspect, the to-be-transmitted frames of the first terminal device are uplink frames, and the first information indicates the quantity of to-be-transmitted frames of the first terminal device.

In a possible implementation of the fourth aspect, that the priorities of the N terminal devices are determined based on the quantities of to-be-transmitted frames of the N terminal devices includes: Sending priorities or receiving priorities of the N terminal devices are determined based on the quantities of to-be-transmitted frames of the N terminal devices, where the sending priorities or the receiving priorities of the N terminal devices are positively correlated with the quantities of to-be-transmitted frames of the N terminal devices.

In a possible implementation of the fourth aspect, the sending priorities or the receiving priorities of the N terminal devices are positively correlated with spectral efficiency of the N terminal devices.

In a possible implementation of the fourth aspect, that the priorities of the N terminal devices are determined based on the quantities of to-be-transmitted frames of the N terminal devices includes: The priorities of the N terminal devices are determined based on the quantities of to-be-transmitted frames of the N terminal devices and first-packet wait duration of the to-be-transmitted frames of the N terminal devices. The transceiver unit is further configured to send third information, where the third information is used to determine first-packet wait duration of the to-be-transmitted frames of the first terminal device.

In a possible implementation of the fourth aspect, the to-be-transmitted frames of the N terminal devices are downlink frames, and the third information indicates arrival moments of the to-be-transmitted frames of the first terminal device; and/or the to-be-transmitted frames of the N terminal devices are uplink frames, and the third information indicates the first-packet wait duration of the to-be-transmitted frames of the first terminal device.

In a possible implementation of the fourth aspect, that the priorities of the N terminal devices are determined based on the quantities of to-be-transmitted frames of the N terminal devices and the first-packet wait duration of the to-be-transmitted frames of the N terminal devices includes: Sending priorities or receiving priorities of the N terminal devices are determined based on the quantities of to-be-transmitted frames of the N terminal devices and the first-packet wait duration of the to-be-transmitted frames of the N terminal devices, where the sending priorities or the receiving priorities of the N terminal devices are positively correlated with the quantities of to-be-transmitted frames of the N terminal devices, and the sending priorities or the receiving priorities of the N terminal devices are positively correlated with lengths of the first-packet wait duration of the to-be-transmitted frames of the N terminal devices.

In a possible implementation of the fourth aspect, the sending priorities or the receiving priorities of the N terminal devices are positively correlated with spectral efficiency of the N terminal devices.

In the fourth aspect, the processing unit and the transceiver unit may alternatively be configured to perform the steps performed in the possible implementations of the second aspect, and achieve corresponding technical effects. For details, refer to the second aspect. Details are not described herein again.

A fifth aspect of this application provides a communication apparatus, including at least one processor. The at least one processor is coupled to a memory, and the processor is configured to perform the method according to any one of the first aspect or the possible implementations of the first aspect.

For example, the memory is configured to store a program or instructions, and the at least one processor is configured to execute the program or the instructions, to enable the apparatus to implement the method according to any one of the first aspect or the possible implementations of the first aspect.

A sixth aspect of this application provides a communication apparatus, including at least one processor. The at least one processor is coupled to a memory, and the processor is configured to perform the method according to any one of the second aspect or the possible implementations of the second aspect.

For example, the memory is configured to store a program or instructions, and the at least one processor is configured to execute the program or the instructions, to enable the apparatus to implement the method according to any one of the second aspect or the possible implementations of the second aspect.

A seventh aspect of this application provides a communication apparatus, including at least one logic circuit and an input/output interface. The logic circuit is configured to perform the method according to any one of the first aspect or the possible implementations of the first aspect.

An eighth aspect of this application provides a communication apparatus, including at least one logic circuit and an input/output interface. The logic circuit is configured to perform the method according to any one of the second aspect or the possible implementations of the second aspect.

A ninth aspect of this application provides a computer-readable storage medium. The computer-readable storage medium is configured to store one or more computer-executable instructions. When the computer-executable instructions are executed by a processor, the processor performs the method according to any one of the possible implementations of the first aspect and the second aspect.

A tenth aspect of this application provides a computer program product (also referred to as a computer program). When the computer program product is executed by a processor, the processor performs the method according to any one of the possible implementations of the first aspect and the second aspect.

An eleventh aspect of this application provides a chip system. The chip system includes at least one processor, configured to support a communication apparatus in implementing a function in any one of the possible implementations of the first aspect and the second aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

A twelfth aspect of this application provides a communication system. The communication system includes the communication apparatus in the third aspect and the call apparatus in the fourth aspect, or the communication system includes the communication apparatus in the fifth aspect and the communication apparatus in the sixth aspect, or the communication system includes the communication apparatus in the seventh aspect and the communication apparatus in the eighth aspect.

For technical effects of any design in the third aspect to the twelfth aspect, refer to the technical effects of the first aspect, the second aspect, and different designs of the first aspect and the second aspect. Details are not described herein again.

## BRIEF DESCRIPTION OF DRAWINGS

FIG. 1 is a diagram of a communication system according to this application;
FIG. 2 is another diagram of frame transmission according to this application;
FIG. 3 is a diagram of a communication method according to this application;
FIG. 4a is another diagram of a communication method according to this application;
FIG. 4b is another diagram of a communication method according to this application;
FIG. 4c is another diagram of a communication method according to this application;
FIG. 5a is another diagram of a communication method according to this application;
FIG. 5b is another diagram of a communication method according to this application;
FIG. 6 is another diagram of a communication method according to this application;
FIG. 7A and FIG. 7B are another diagram of a communication method according to this application;
FIG. 8 is a diagram of a communication apparatus according to this application;
FIG. 9 is another diagram of a communication apparatus according to this application;
FIG. 10 is another diagram of a communication apparatus according to this application; and
FIG. 11 is another diagram of a communication apparatus according to this application.

## DESCRIPTION OF EMBODIMENTS

First, some terms in embodiments of this application are described for ease of understanding by a person skilled in the art.

1. A terminal device in this application includes a device that provides voice for a user, a device that provides data connectivity for a user, and a device that provides voice and data connectivity for a user. For example, the terminal device may include a handheld device with a wireless connection function or a processing device connected to a wireless modem. The terminal device may also be referred to as a terminal. The terminal may communicate with a core network through a radio access network (radio access network, RAN), and exchange voice or data with the RAN, or exchange voice and data with the RAN. The terminal may include user equipment (user equipment, UE), a wireless terminal, a mobile terminal, a device-to-device (device-to-device, D2D) communication terminal, a vehicle-to-everything (vehicle-to-everything, V2X) terminal, a roadside unit (roadside unit, RSU), a machine-to-machine/machine type communication (machine-to-machine/machine type communication, M2M/MTC) terminal, an internet of things (internet of things, IoT) terminal, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. The terminal may include a mobile phone (or referred to as a "cellular" phone), a computer with a mobile terminal, a portable, pocket-sized, handheld, or computer built-in mobile apparatus, or the like. The terminal may include a personal communication service (personal communication service, PCS) phone, a cordless telephone set, a session initiation protocol (session initiation protocol, SIP) phone, a wireless local loop (wireless local loop, WLL) station, a personal digital assistant (personal digital assistant, PDA), or the like. The terminal further includes a limited device, for example, a device with low power consumption, a device with a limited storage capability, or a device with a limited computing capability. The terminal may include an information sensing device like a barcode, radio frequency identification (radio frequency identification, RFID), a sensor, a global positioning system (global positioning system, GPS), or a laser scanner.

By way of example rather than limitation, in embodiments of this application, the terminal device may alternatively be a wearable device. The wearable device may also be referred to as a wearable intelligent device, an intelligent wearable device, or the like, and is a general term for wearable devices that are intelligently designed and developed for daily wear by using a wearable technology, for example, glasses, gloves, watches, clothes, and shoes. The wearable device is a portable device that is directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without relying on smartphones, for example, smart watches or smart glasses; and include devices that focus only on one type of application function and that need to be used together with other devices like smartphones, for example, various smart bands, smart helmets, or smart jewelry for monitoring physical signs.

If the terminals described above are located in a vehicle, for example, placed in the vehicle or installed in the vehicle, all of the terminals may be considered as in-vehicle terminals. For example, the in-vehicle terminal is also referred to as an on-board unit (on-board unit, OBU).

In embodiments of this application, an apparatus for implementing a function of a terminal may be a terminal, or may be a circuit that can support a terminal in implementing the function, for example, a circuit that can be used in a chip system. The chip system may be installed in the terminal. In embodiments of this application, the chip system may include a chip, or may include a chip and another discrete component. In the technical solutions provided in embodiments of this application, the technical solutions provided in embodiments of this application are described by using an example in which the apparatus for implementing a function of a terminal is a terminal.

2. A network device in this application may include a radio access network (radio access network, RAN) device, for example, a base station (for example, an access point). The network device may be a device that communicates with a terminal device through an air interface in an access network. Alternatively, a network device in a vehicle-to-everything (vehicle-to-everything, V2X) technology is a roadside unit (roadside unit, RSU). The base station may be configured to perform mutual conversion between a received over-the-air frame and an IP packet, and serve as a router between the terminal and a remaining part of the access network. The remaining part of the access network may include an IP network. The RSU may be a fixed infrastructure entity supporting a V2X application, and exchanges a message with another entity supporting the V2X application. The network device may further coordinate attribute management of the air interface. For example, the network device may include an evolved NodeB (evolved NodeB, NodeB, eNB, or e-NodeB) in a long term evolution (long term evolution, LTE) system or a long term evolution-advanced (long term evolution-advanced, LTE-A) system, or may include a next generation NodeB (next generation NodeB, gNB) in an evolved packet core (evolved packet core, EPC) network, a 5th generation (5th generation, 5G) communication technology, or a new radio (new radio, NR) system (also referred to as an NR system), or may include a central unit (central unit, CU) and a distributed unit (distributed unit, DU) in a cloud access network (cloud radio access network, Cloud RAN) system. This is not limited in embodiments of this application. The network device may further include a core network device, and the core network device includes, for example, an access and mobility management function (access and mobility management function, AMF). It should be noted that the RSU may be a network RSU or a terminal device RSU. When the RSU serves as a network RSU, the RSU performs a function of a network device. When the RSU serves as a terminal device RSU, the RSU performs a function of a terminal device.

The network device can send configuration information (for example, carried in a scheduling message and/or an indication message) to the terminal device, and the terminal device further performs network configuration based on the configuration information, so that network configurations of the network device and the terminal device are aligned. Alternatively, a network configuration is preset on the network device, and a network configuration is preset on the terminal device, so that network configurations of the network device and the terminal device are aligned. Specifically, "alignment" means that when there is an interaction message between the network device and the terminal device, the network device and the terminal device have a consistent understanding on a carrier frequency for sending and receiving the interaction message, determining of a type of the interaction message, a meaning of field information carried in the interaction message, or another configuration of the interaction message.

In addition, in another possible case, the network device may be another apparatus providing a wireless communication function for the terminal device. A specific technology and a specific device form that are used by the network device are not limited in embodiments of this application. For ease of description, this is not limited in embodiments of this application.

The network device may further include a core network device. The core network device includes, for example, an AMF, a user plane function (user plane function, UPF), or a session management function (session management function, SMF).

In embodiments of this application, an apparatus for implementing a function of a network device may be a network device, or may be an apparatus, for example, a chip system, that can support a network device in implementing the function. The apparatus may be installed in the network device. In the technical solutions provided in embodiments of this application, the technical solutions provided in embodiments of this application are described by using an example in which the apparatus for implementing a function of a network device is a network device.

3. Configuration and preconfiguration

In this application, both the configuration and the preconfiguration are used. The configuration means that a network device or a server sends configuration information of some parameters or values of parameters to a terminal by using a message or signaling, so that the terminal determines a parameter for communication or a resource for transmission based on the values or the information. The preconfiguration is similar to the configuration. The preconfiguration may be a manner in which a network device or a server sends parameter information or a value to a terminal through a carrier or a link other than a sidelink; or may be a manner in which a corresponding parameter or parameter value is defined, or a related parameter or value is pre-written to a terminal device. This is not limited in this application. Further, these values and parameters may be changed or updated.

4. The terms "system" and "network" in embodiments of this application may be used interchangeably. "At least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. The character "/" usually indicates an "or" relationship between the associated objects. "At least one of the following items (pieces)" or a similar expression thereof indicates any combination of the items, including one of the items (pieces) or any combination of a plurality of the items (pieces). For example, "at least one of A, B, and C" includes A, B, C, AB, AC, BC, or ABC. In addition, unless otherwise specified, ordinal numbers such as "first" and "second" in embodiments of this application are intended to distinguish between a plurality of objects, but not to limit an order, a time sequence, priorities, or importance of the plurality of objects.

This application may be applied to a long term evolution (long term evolution, LTE) system, a new radio (new radio, NR) system, or another communication system. The communication system includes a network device and a terminal device. The network device serves as a configuration information sending entity, and the terminal device serves as a configuration information receiving entity. Specifically, in the communication system, an entity sends configuration information to another entity, and sends data to the another entity or receives data sent by the another entity. The another entity receives the configuration information, and sends data to the configuration information sending entity based on the configuration information or receives data sent by the configuration information sending entity. This application may be applied to a terminal device in a connected state or an active (active) state, or may be applied to a terminal device in a non-connected (inactive) state or an idle (idle) state.

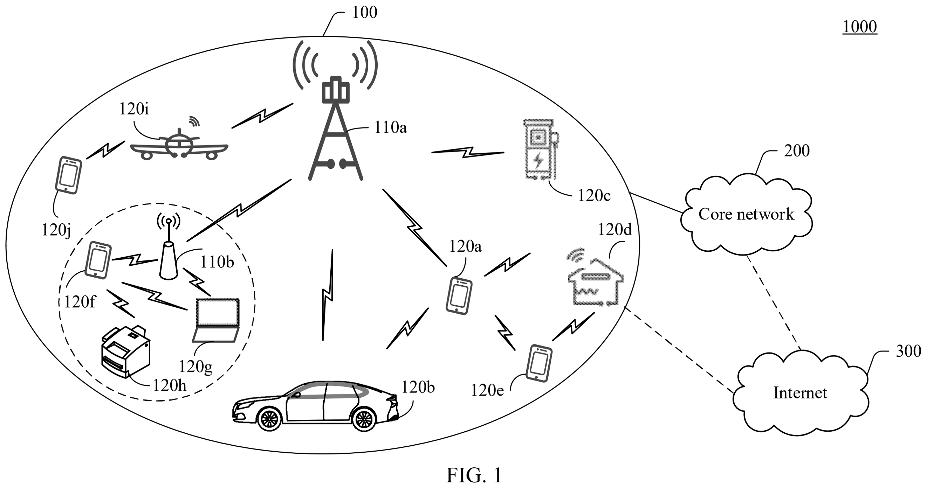

FIG. 1 is a diagram of an architecture of a communication system 1000 to which embodiments of this application are applied.

As shown in FIG. 1, the communication system includes a radio access network 100 and a core network 200. Optionally, the communication system 1000 may further include an internet 300. The radio access network 100 may include at least one radio access network device (which may also be understood as a network device described above, for example, 110a and 110b in FIG. 1), and may further include at least one terminal (which may also be understood as a terminal device described above, for example, 120a to 120j in FIG. 1). In addition, the radio access network device may be a macro base station (for example, 110a in FIG. 1), or may be a micro base station or an indoor base station (for example, 110b in FIG. 1), or may be a relay node, a donor node, or the like. It can be understood that all or a part of functions of the radio access network device in this application may alternatively be implemented by using a software function running on hardware, or may be implemented by using an instantiated virtualization function on a platform (for example, a cloud platform). A specific technology and a specific device form that are used by the radio access network device are not limited in embodiments of this application.

For ease of description, an example in which a base station serves as the radio access network device and the terminal device is denoted as a terminal is used for description. It can be understood that, when the communication system includes an integrated access and backhaul (integrated access and backhaul, IAB) network, the base station may be an IAB node.

This application, the base station and the terminal may be at fixed locations, or may be movable. The base station and the terminal may be deployed on land, including an indoor or outdoor scenario and a handheld or vehicle-mounted scenario, or may be deployed on water, or may be deployed on an airplane, a balloon, or an artificial satellite in the air. Application scenarios of the base station and the terminal are not limited in embodiments of this application.

Roles of the base station and the terminal may be relative roles. For example, a helicopter or an uncrewed aerial vehicle 120i in FIG. 1 may be configured as a mobile base station. For a terminal 120j accessing the radio access network 100 through 120i, the terminal 120i is a base station. However, for a base station 110a, 120i is a terminal. To be specific, 110a and 120i communicate with each other through a radio air interface protocol. Certainly, 110a and 120i may alternatively communicate with each other through an interface protocol between base stations. In this case, for 110a, 120i is also a base station. Therefore, both the base station and the terminal may be collectively referred to as communication apparatuses. 110a and 110b in FIG. 1 may be referred to as communication apparatuses with a function of a base station. 120a to 120j in FIG. 1 may be referred to as communication apparatuses with a function of a terminal.

Communication between the base station and the terminal, between base stations, or between terminals may be performed on a licensed spectrum, or may be performed on an unlicensed spectrum, or may be performed on both a licensed spectrum and an unlicensed spectrum. Communication may be performed on a spectrum below 6 gigahertz (gigahertz, GHz), or may be performed on a spectrum above 6 GHz, or may be performed on both a spectrum below 6 GHz and a spectrum above 6 GHz. A spectrum resource used for wireless communication is not limited in embodiments of this application.

In embodiments of this application, a function of the base station may alternatively be performed by a module (for example, a chip) in the base station, or may be performed by a control subsystem including the function of the base station. The control subsystem including the function of the base station herein may be a control center in an application scenario of the terminal, for example, a smart grid, industrial control, smart transportation, or a smart city. A function of the terminal may alternatively be performed by a module (for example, a chip or a modem) in the terminal, or may be performed by an apparatus including the function of the terminal.

In this application, the base station sends a downlink signal (or downlink information) to the terminal, where the downlink signal (or the downlink information) is carried in a downlink channel. The terminal sends an uplink signal (or uplink information) to the base station, where the uplink signal (or the uplink information) is carried in an uplink channel.

It should be understood that this application may be applied to a long term evolution (long term evolution, LTE) system, a new radio (new radio, NR) system, or a communication system (for example, 6G) evolved after 5G. The communication system includes a network device and a terminal device.

In recent years, with continuous progress and improvement of XR technologies, related industries have developed vigorously. Nowadays, the extended reality technologies are applied to various fields closely related to production and life of people, for example, education, entertainment, military affairs, medical care, environmental protection, transportation, and public health. Extended reality is a general term for various reality-related technologies, and specifically includes virtual reality (virtual reality, VR), augmented reality (augmented reality, AR), and mixed reality (mixed reality, MR).

For example, in the VR technology, a visual and audio scene may be rendered to simulate, as much as possible, sensory stimulation caused by vision and audio to a user in the real world. In the VR technology, the user usually needs to wear a head-mounted display (head-mounted display, HMD), so that a field of view of the user is completely replaced with a simulated visual component. In addition, the user needs to wear a headset to provide accompanying audio for the user. In addition, in the VR, head and action tracking usually needs to be performed on the user, to update simulated visual and audio content in a timely manner, so that visual and audio content experienced by the user is consistent with an action of the user.

For example, in the AR technology, additional visual or auditory information or artificially generated content may be provided in a real environment perceived by a user. The user may directly obtain the real environment without intermediate sensing, processing, or rendering; or may indirectly obtain the real environment, to be specific, the real environment is transmitted through a sensor or the like, and undergoes further enhancement processing or the like.

For example, the MR mixed reality technology may be an advanced form of the AR. One of implementations of the MR mixed reality technology is to insert some virtual elements into a physical scene, to provide a user with immersive experience in which the elements are a part of a real scene.

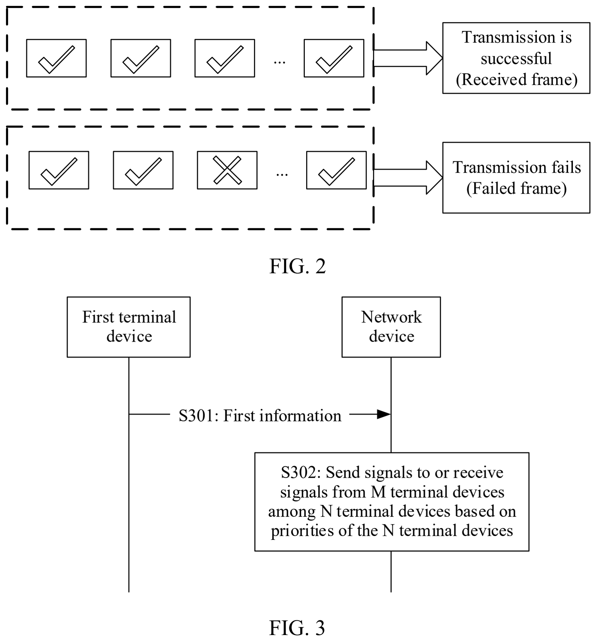

In an XR scenario, data is exchanged between a service center and a sensor device. In the XR scenario, a data service operates in units of frames and has a frame integrity requirement. A reason is as follows: Data packets in a video frame are related to each other at an application layer, loss of one or more data packets causes a decoding failure of the video frame, and frame-level integrity is an important factor that affects service experience of an XR user. For example, in FIG. 2, a successfully transmitted frame may be a "Received Frame" in the figure. To be specific, all data packets in the frame are successfully received by a receiver, and the frame integrity requirement is met. In FIG. 2, an unsuccessfully transmitted frame may be a "Failed Frame" in the figure. To be specific, one or more data packets in the frame are not successfully received by a receiver, and the frame integrity requirement is not met.

In addition to the frame integrity requirement, an XR service further has a delay requirement on a frame. For example, data of each frame needs to be successfully transmitted within a specified delay requirement (for example, 10 milliseconds (10 ms) or 5 ms).

In an implementation example, the 3rd generation partnership project (3rd generation partnership project, 3GPP) provides a typical scenario of an XR service. For example, the XR service may operate in units of video frames, and a data amount of each video frame complies with truncated Gaussian distribution. Each frame is divided into a base layer and an enhancement. The base layer usually includes an intra-coded frame (Intra-coded picture, I frame for short) in a video frame, and the enhancement layer usually includes a forward-predicted frame (Predicted picture, P frame for short) in the video frame. Data sizes of the base layer and the enhancement layer may comply with a specific ratio (for example, 1:9 or 1:10). Optionally, an arrival periodicity of a video frame of an XR service complies with truncated Gaussian distribution. Such an XR service has one or more of the following quality of service (quality of service, QoS) constraints:

1. Hard constraint on a 10-millisecond (ms) delay of a frame: When each frame is scheduled within 10 ms, it is considered that the frame is successfully transmitted. Data of a frame not successfully transmitted within 10 ms is cleared, and it is considered that transmission of the frame fails.
2. Satisfied user: When a base layer of a user is completely received and a specific proportion (for example, 50% or 60%, where the proportion may be referred to as a frame satisfaction rate requirement) of an enhancement layer is received, the user may be considered as a satisfied user.
3. Quantity of supported users: A total quantity of active users of a system is M, and a total quantity of satisfied users is N. If N/M×100% is greater than 90%, M is a quantity of users supported by the system.
4. QoS requirement in an XR scenario: The quantity of supported users is to be maximized.

Currently, basic devices of a communication network are widely deployed, and carry different wireless services. Different wireless service data is divided into data packets, and the data packets are transmitted via the communication network. Therefore, several important evaluation indicators of the communication network are a delay of a data packet (from a moment at which the data packet enters a transmission wait queue of a base station to a moment at which the data packet is successfully transmitted to a receiver) and a network throughput (a quantity of data packets that can be successfully transmitted).

Most scheduling algorithms (for example, a media access control (media access control, MAC) layer scheduling algorithm) of a network device (for example, the base station) in the communication network may be designed from a perspective of ensuring a delay and increasing a throughput. In other words, in a communication system, a network device may determine priorities of terminal devices according to a scheduling algorithm, and send signals to or receive signals from the terminal devices based on the priorities. Based on optimization of the scheduling algorithm, network services can be provided for more terminal devices by using limited communication resources, to increase a system capacity. For example, in the scheduling algorithm, parameters such as quality of a channel between a terminal device and the network device and/or a historical transmission rate of the terminal device may be considered. For example, higher channel quality corresponding to a terminal device indicates a higher priority of the terminal device. For another example, a higher historical transmission rate corresponding to a terminal device indicates a lower priority of the terminal device. In this way, signals from different terminal devices show an alternate transmission characteristic from a macro perspective.

In an implementation example, the scheduling algorithm may be a classic proportional fairness (proportional fairness, PF) algorithm. The scheduling algorithm maximizes a system throughput while ensuring fairness among users. The algorithm is specifically described as follows:

A priority of a user i is calculated as follows: $\text{Priority}_i = \frac{\text{eff}_i}{r_i}$.

$\text{eff}_i$ indicates current channel quality of UE i, and $r_i$ indicates a historical transmission rate of the user i. $\text{Priority}_i$ is a specific value of the priority, and a magnitude of the value indicates a priority order of the user. When there are a plurality of users, the network device may sort the users in descending order of calculated values of $\text{Priority}_i$. A larger value of $\text{Priority}_i$ indicates a higher priority of the user, and vice versa. Then subsequent scheduling is performed based on the priority order.

It can be learned from the foregoing content that the PF algorithm can take both transmission efficiency and user fairness into consideration. A higher transmission rate of a user ($eff_i$) indicates a higher priority of the user, and a higher historical transmission rate of a user indicates a lower priority of the user. Therefore, the proportional fairness algorithm is considered as an algorithm that takes both transmission efficiency and user fairness into consideration.

In addition, because the PF algorithm needs to ensure both spectral efficiency and fairness, users show an alternate transmission characteristic from a macro perspective. For example, when the system is started, historical transmission rates of all users are the same. In this case, a user with high transmission efficiency has a high priority and preempts a transmission opportunity, and therefore a historical transmission rate is accumulated. With an increase in the historical transmission rate, the priority of the user gradually decreases, and therefore the transmission opportunity is given to a user that has not preempted the transmission opportunity before.

However, service data (for example, extended reality (extended reality, XR) service data) of a terminal device may have time validity. To be specific, the service data of the terminal device needs to be transmitted within a specified delay requirement. However, in the scheduling algorithm, to achieve fairness, signals from different terminal devices are alternately transmitted. Consequently, signals from a part or all of the terminal devices may not be transmitted within the specified delay requirement, affecting user experience.

To resolve the foregoing problem, this application provides a communication method and a related device, to schedule a signal of a terminal device based on a quantity of to-be-transmitted frames of the terminal device, to avoid, to some extent, a problem that the signal of the terminal device cannot be transmitted within a specified delay requirement, and improve user experience. The following provides detailed descriptions with reference to more accompanying drawings.

FIG. 3 is a diagram of a communication method according to this application. The method includes the following steps.

It should be noted that FIG. 3 shows the method by using an example in which a first terminal device and a network device serve as execution entities of interaction. However, execution entities of the interaction are not limited in this application. For example, in FIG. 3 and a corresponding embodiment, S301 and S302 are performed by the first terminal device, or may be performed by a chip, a chip system, or a processor that supports the first terminal device in implementing the method, or may be performed by a logic module or software that can implement all or a part of functions of the first terminal device. In FIG. 3 and the corresponding embodiment, the network device in S301 and S302 may alternatively be replaced with a chip, a chip system, or a processor that supports the network device in implementing the method, or may be replaced with a logic module or software that can implement all or a part of functions of the network device.

S301: The first terminal device sends first information, and correspondingly, the network device receives the first information, where the first information is used to determine a quantity of to-be-transmitted frames of the first terminal device.

It should be noted that, in step S301, the network device may receive N pieces of first information from N terminal devices, where the N terminal devices include the first terminal device, and N is an integer greater than 1. In other words, in step S301, the network device may receive the N pieces of first information, and determine quantities of to-be-transmitted frames of the N terminal devices based on the N pieces of first information respectively.

It should be understood that the to-be-transmitted frame (and an uplink frame, a downlink frame, or the like in the following descriptions) may include a video frame, an image frame, or the like.

Optionally, the to-be-transmitted frame may be to-be-transmitted information with time validity. To be specific, the to-be-transmitted information may vary greatly at different time. For example, if the to-be-transmitted information can be successfully received before a moment, a receiver of the to-be-transmitted information can process the to-be-transmitted information in a timely manner, and correspondingly, the to-be-transmitted information may be referred to as valid information; or if the to-be-transmitted information is not successfully received before the moment, the receiver of the to-be-transmitted information cannot process the to-be-transmitted information in a timely manner, and correspondingly, the to-be-transmitted information may be understood as invalid information. The to-be-transmitted frame may be replaced with other to-be-transmitted information with time validity, for example, neural network data or positioning data that is used to improve image quality or video quality in an XR scenario. Therefore, the foregoing technical solution can be applied to scheduling of other to-be-transmitted information with time validity.

It should be understood that, before transmission information of a terminal device starts to be transmitted, the transmission information of the terminal device may be to-be-transmitted information of the terminal device; and after transmission information of a terminal device is transmitted, the transmission information of the terminal device may include transmitted information and to-be-transmitted information.

Optionally, the transmitted information may be referred to as successfully transmitted information, successfully received information, or the like.

Optionally, the transmission information of the terminal device (or a terminal device corresponding to the to-be-transmitted frame) may have a frame satisfaction rate requirement, and the frame satisfaction rate requirement may indicate a proportion (or a coefficient, or the like). To be specific, when a frame successfully sent or received by the terminal device satisfies the proportion, transmission information sent or received by the terminal device meets the frame satisfaction rate requirement, and the terminal device may be referred to as a satisfied user.

Further, optionally, for downlink transmission, the network device may receive downlink transmission information of the N terminal devices from a service server or locally generate downlink transmission information of the N terminal devices. For the downlink transmission information of the N terminal devices, the network device may determine N first queues corresponding to the N terminal devices (because information in the first queue is specifically service information that is actually to be transmitted, the first queue may be referred to as a service queue). When the frame satisfaction rate requirement is considered, because the frame satisfaction rate requirement may be met if the network device successfully sends a specific proportion of frames, in other words, the network device may not need to send all frames, correspondingly, the network device may determine N first queues corresponding to the N terminal devices (because information in the second queue is specifically service information that is to be transmitted and that is simulated according to the frame satisfaction rate requirement, the second queue may be referred to as a virtual queue).

Further, optionally, for uplink transmission, for any one of the N terminal devices, the terminal device may receive uplink transmission information from another device or locally generate uplink transmission information of the terminal device. For the uplink transmission information of the terminal device, the terminal device may determine a first queue corresponding to the terminal device (because information in the first queue is specifically service information that is actually to be transmitted, the first queue may be referred to as a service queue). When the frame satisfaction rate requirement is considered, because the frame satisfaction rate requirement may be met if the terminal device successfully sends a specific proportion of frames, in other words, the terminal device may not need to send all frames, correspondingly, the terminal device may determine a second queue corresponding to the terminal device (because information in the second queue is specifically service information that is to be transmitted and that is simulated according to the frame satisfaction rate requirement, the second queue may be referred to as a virtual queue).

In other words, transmission information of a terminal device includes downlink transmission information on the network device and/or uplink transmission information on the terminal device, and a transmission queue to which the transmission information of the terminal device belongs may be a first queue or a second queue. For example, when the frame satisfaction rate requirement is not considered or a value of a proportion corresponding to the frame satisfaction rate requirement is 1, the transmission queue to which the transmission information belongs may be referred to as the first queue. For another example, when the frame satisfaction rate requirement is considered, the transmission queue to which the transmission information belongs may be referred to as the second queue.

In an implementation example, downlink transmission is used as an example. The first queue may be understood as follows: Downlink transmission information of a terminal device is stored or cached on the network device after arriving at the network device (for example, a base station) from a service server or a core network device. A queue to which the downlink transmission information belongs may be referred to as the first queue (namely, the service queue). A queue length of the first queue indicates a current remaining amount of data to be transmitted by the terminal device. It can be understood that the queue length of the first queue is equal to a data amount of the downlink transmission information when the downlink transmission information arrives, and then gradually decreases as the downlink transmission information of the terminal device is scheduled for transmission. Therefore, the length of the first queue (namely, the service queue) may be measured in units of data amounts (bit).

In an implementation example, downlink transmission is used as an example. The first queue may be understood as follows: A virtual queue is introduced for each terminal device, and the queue may be measured in units of quantities of frames. An increase in the virtual queue may be determined based on an average frame arrival rate of the terminal device and a frame satisfaction rate requirement (a, $0 < a \leq 1$) of the terminal device. For example, assuming that $x_i$ is a service arrival rate of an $i^{th}$ terminal device among the N terminal devices, an arrival rate $y_i$ of a virtual queue of the $i^{th}$ terminal device is as follows:

$$y_i = a * x_i.$$

Frames periodically enter the virtual queue based on the arrival rate $y_j$. Each time a service queue is cleared within a delay limit, one frame is successfully transmitted, and a length of a corresponding virtual queue decreases by 1. In this case, a length of the virtual queue corresponding to the $i^{th}$ terminal device is $r_i$.

It should be understood that, due to limited network resources, during implementation in which the network device sends signals to or receives signals from M terminal devices among the N terminal devices based on priorities of the N terminal devices, when a current network resource is less than a resource used to carry the N network devices, the network device may send the signals to the M terminal devices among the N terminal devices, and M is less than N; or when a current network resource is greater than or equal to a resource used to carry the N network devices, the network device may send signals to the N terminal devices.

In a possible implementation, the to-be-transmitted frames of the N terminal devices are downlink frames, and the N pieces of first information respectively indicate quantities of transmitted frames successfully received by the N terminal devices. To be specific, the first information sent by the first terminal device in step S301 indicates a quantity of transmitted frames successfully received by the first terminal device. Specifically, when the to-be-transmitted frames of the N terminal devices are downlink frames, the foregoing technical solution may be applied to a downlink transmission scenario. The N pieces of first information respectively indicate the quantities of transmitted frames successfully received by the N terminal devices, so that the network device can determine the quantities of to-be-transmitted frames of the N terminal devices based on the quantities of transmitted frames successfully received by the N terminal devices.

In a possible implementation, the first information includes at least one of a hybrid automatic repeat request acknowledgement (hybrid automatic repeat request acknowledgement, HARQ ACK), a hybrid automatic repeat request negative acknowledgement (hybrid automatic repeat request negative acknowledgement, HARQ NACK), and frame satisfaction rate information, and the frame satisfaction rate information is determined based on a quantity of successfully received frames and a quantity of frames expected to be successfully received. Specifically, when the first information indicates a quantity of transmitted frames successfully received by a terminal device, the first information may include at least one of the foregoing, to improve flexibility of implementing the solution.

In a possible implementation, that the N pieces of first information are respectively used to determine the quantities of to-be-transmitted frames of the N terminal devices includes: The N pieces of first information and N pieces of second information are used to determine the quantities of to-be-transmitted frames of the N terminal devices, and the N pieces of second information respectively indicate service arrival rates of the N terminal devices and/or frame satisfaction rate requirements of the N terminal devices. Specifically, in a process in which the network device determines the quantities of to-be-transmitted frames of the N terminal devices based on the N pieces of first information, the network device may further use the N pieces of second information as one of bases for determining the quantities of to-be-transmitted frames of the N terminal devices. Therefore, the network device may determine total quantities of transmitted frames of the N terminal devices based on the service arrival rates of the N terminal devices and/or the frame satisfaction rates of the N terminal devices, and the network device may determine the quantities of to-be-transmitted frames based on the total quantities of transmitted frames and the quantities of successfully received transmitted frames that are indicated by the first information.

In a possible implementation, the to-be-transmitted frames of the N terminal devices are uplink frames, and the N pieces of first information respectively indicate the quantities of to-be-transmitted frames of the N terminal devices. To be specific, the first information sent by the first terminal device in step S301 indicates the quantity of to-be-transmitted frames of the first terminal device. Specifically, when the to-be-transmitted frames of the N terminal devices are uplink frames, the foregoing technical solution may be applied to an uplink transmission scenario. The N pieces of first information respectively indicate the quantities of to-be-transmitted frames of the N terminal devices, so that the network device can obtain the quantities of to-be-transmitted frames of the N terminal devices based on the N pieces of first information.

S302: The network device sends the signals to or receives the signals from the M terminal devices among the N terminal devices based on the priorities of the N terminal devices, where the priorities of the N terminal devices are determined based on the quantities of to-be-transmitted frames of the N terminal devices, the signals of the M terminal devices are used to carry a part or all of to-be-transmitted frames of the M terminal devices, and M is an integer less than or equal to N.

In a possible implementation, that the priorities of the N terminal devices are determined based on the quantities of to-be-transmitted frames of the N terminal devices includes: Sending priorities or receiving priorities of the N terminal devices are determined based on the quantities of to-be-transmitted frames of the N terminal devices, where the sending priorities or the receiving priorities of the N terminal devices are positively correlated with the quantities of to-be-transmitted frames of the N terminal devices. Specifically, in a process in which the network device sends signals to or receives signals from the N terminal devices, the network device may determine the sending priorities or the receiving priorities of the N terminal devices based on the quantities of to-be-transmitted frames of the N terminal devices. Larger quantities of to-be-transmitted frames of the N terminal devices indicate higher sending priorities or receiving priorities of the N terminal devices. On the contrary, smaller quantities of to-be-transmitted frames of the N terminal devices indicate lower sending priorities or receiving priorities of the N terminal devices. A larger quantity of to-be-transmitted frames of a terminal device indicates that a current frame satisfaction rate of the terminal device is lower (to be specific, a current to-be-transmitted frame of the terminal device is likely to become invalid). Therefore, in the foregoing technical solution, a signal of a terminal device with a larger quantity of to-be-transmitted frames can be preferentially sent or received, to improve user experience.

In a possible implementation, the sending priorities or the receiving priorities of the N terminal devices are positively correlated with spectral efficiency of the N terminal devices. Specifically, in a process in which the network device sends signals to or receives signals from the N terminal devices, the network device may determine the sending priorities or the receiving priorities of the N terminal devices based on the spectral efficiency of the terminal devices. Higher spectral efficiency of the N terminal devices indicates higher sending priorities or receiving priorities of the N terminal devices. On the contrary, lower spectral efficiency of the N terminal devices indicates lower sending priorities or receiving priorities of the N terminal devices. Higher spectral efficiency of a terminal device indicates that current communication quality of the terminal device is higher. Therefore, in the foregoing technical solution, a signal of a terminal device with higher spectral efficiency can be preferentially sent or received, to improve utilization of system resources.

Optionally, spectral efficiency of a terminal device may be determined based on channel quality information of the terminal device (or a value of the spectral efficiency may be a value of the channel quality information). The channel quality information may include a received signal strength indicator (received signal strength indicator, RSSI), reference signal received power (reference signal received power, RSRP), reference signal received quality (reference signal received quality, RSRQ), or the like.

In a possible implementation, a sending priority or a receiving priority $p_{i,1}$ of an $i^{th}$ terminal device among the N terminal devices satisfies:

$$p_{i,1} = c_i * f\left(\frac{r_i - \overline{R}}{\overline{R}^\alpha}\right);$$

or

$$p_{i,1} = \frac{c_i}{\overline{c_1}} * f\left(\frac{r_i - \overline{R}}{\overline{R}^\alpha}\right),$$

where

$c_i$ indicates spectral efficiency of the $i^{th}$ terminal device, $\overline{c_1}$ indicates historical average spectral efficiency of the $i^{th}$ terminal device, $r_i$ indicates a quantity of to-be-transmitted frames of the $i^{th}$ terminal device, $\overline{R}$ indicates an average value of the quantities of to-be-transmitted frames of the N terminal devices, $\alpha$ is an optimization parameter, and $f\left(\frac{r_i - \overline{R}}{\overline{R}^\alpha}\right)$ indicates a monotonically increasing function with respect to $\frac{r_i - \overline{R}}{\overline{R}^\alpha}$.

Specifically, the sending priority or the receiving priority of the $i^{th}$ terminal device among the N terminal devices may be implemented in the foregoing manner, to provide a specific implementation of determining the priority.

Optionally, the foregoing formula mainly includes a process of calculating a priority of a frame. Correspondingly, the foregoing technical solution may be referred to as a frame priority calculation process.

Optionally, the sending priority or the receiving priority of the $i^{th}$ terminal device among the N terminal devices may alternatively be determined in another manner. For example, equivalent transformation is performed on the foregoing formula, or some parameters are added to or removed from the foregoing formula (for example, bandwidth used by the terminal device is added, or the spectral efficiency is removed). This is not limited herein.

In a possible implementation, that the priorities of the N terminal devices are determined based on the quantities of to-be-transmitted frames of the N terminal devices includes: The priorities of the N terminal devices are determined based on the quantities of to-be-transmitted frames of the N terminal devices and first-packet wait duration of the to-be-transmitted frames of the N terminal devices. The method further includes: The network device receives N pieces of third information, where the N pieces of third information are respectively used to determine the first-packet wait duration of the to-be-transmitted frames of the N terminal devices. Specifically, in a process in which the network device sends signals to or receives signals from the N terminal devices, the network device may determine the sending priorities or the receiving priorities of the N terminal devices based on the first-packet wait duration of the to-be-transmitted frames. Longer first-packet wait duration of the to-be-transmitted frames of the N terminal devices indicates higher sending priorities or receiving priorities of the N terminal devices. On the contrary, shorter spectral efficiency of the N terminal devices indicates lower sending priorities or receiving priorities of the N terminal devices. Longer first-packet wait duration of a to-be-transmitted frame indicates that a current frame satisfaction rate of the terminal device is lower (to be specific, a current to-be-transmitted frame of the terminal device is likely to become invalid). Therefore, in the foregoing technical solution, a signal of a terminal device that has a to-be-transmitted frame with longer first-packet wait duration can be preferentially sent or received, to improve user experience.

In a possible implementation, the to-be-transmitted frames of the N terminal devices are downlink frames, and the N pieces of third information respectively indicate arrival moments of the to-be-transmitted frames of the N terminal devices; and/or the to-be-transmitted frames of the N terminal devices are uplink frames, and the N pieces of third information respectively indicate the first-packet wait duration of the to-be-transmitted frames of the N terminal devices. Specifically, the third information used to determine the first-packet wait duration of the to-be-transmitted frames of the N terminal devices may be determined in the foregoing plurality of manners, to provide implementations of determining the third information in different scenarios.

In a possible implementation, that the priorities of the N terminal devices are determined based on the quantities of to-be-transmitted frames of the N terminal devices and the first-packet wait duration of the to-be-transmitted frames of the N terminal devices includes: Sending priorities or receiving priorities of the N terminal devices are determined based on the quantities of to-be-transmitted frames of the N terminal devices and the first-packet wait duration of the to-be-transmitted frames of the N terminal devices, where the sending priorities or the receiving priorities of the N terminal devices are positively correlated with the quantities of to-be-transmitted frames of the N terminal devices, and the sending priorities or the receiving priorities of the N terminal devices are positively correlated with lengths of the first-packet wait duration of the to-be-transmitted frames of the N terminal devices. Specifically, in a process in which the network device sends signals to or receives signals from the N terminal devices, the network device may determine the sending priorities or the receiving priorities of the N terminal devices based on the quantities of to-be-transmitted frames and the first-packet wait duration of the to-be-transmitted frames. Therefore, in the foregoing technical solution, a signal of a terminal device that has a to-be-transmitted frame with longer first-packet wait duration can be preferentially sent or received, and a signal of a terminal device with a larger quantity of to-be-transmitted frames can be preferentially sent or received, to improve user experience and improve utilization of system resources.

In a possible implementation, a sending priority or a receiving priority $p_i$ of an $i^{th}$ terminal device among the N terminal devices satisfies:

$$p_i = c_i * f\left(\frac{r_i - \overline{R}}{\overline{R}^\alpha}\right) + c_i * f\left(\frac{W_i - \overline{W}}{\overline{W}^\alpha}\right);$$

or

$$p_i = \frac{c_i}{\overline{c_i}} * f\left(\frac{r_i - \overline{R}}{\overline{R}^\alpha}\right) + \frac{c_i}{\overline{c_i}} * f\left(\frac{W_i - \overline{W}}{\overline{W}^\alpha}\right),$$

where

$c_i$ indicates spectral efficiency of the $i^{th}$ terminal device, $\overline{c_1}$ indicates historical average spectral efficiency of the $i^{th}$ terminal device, $r_i$ indicates a quantity of to-be-transmitted frames of the $i^{th}$ terminal device, $\overline{R}$ indicates an average value of the quantities of to-be-transmitted frames of the N terminal devices, $\alpha$ is an optimization parameter, $W_i$ indicates first-packet wait duration of the to-be-transmitted frames of the $i^{th}$ terminal device, $\overline{W}$ indicates an average value of first-packet wait duration of to-be-transmitted frames of an $N^{th}$ terminal device, $f\left(\frac{r_i - \overline{R}}{\overline{R}^\alpha}\right)$ indicates a monotonically increasing function with respect to $\frac{r_i - \overline{R}}{\overline{R}^\alpha}$, and $f\left(\frac{W_i - \overline{W}}{\overline{W}^\alpha}\right)$ indicates a monotonically increasing function with respect to $\frac{W_i - \overline{W}}{\overline{W}^\alpha}$.

Specifically, the sending priority or the receiving priority of the $i^{th}$ terminal device among the N terminal devices may be implemented in the foregoing manner, to provide a specific implementation of determining the priority.

Optionally, the foregoing formula includes a process of calculating a priority of a first packet. Correspondingly, the foregoing technical solution may be referred to as a packet priority calculation process.

Optionally, the sending priority or the receiving priority of the $i^{th}$ terminal device among the N terminal devices may alternatively be determined in another manner. For example, equivalent transformation is performed on the foregoing formula, or some parameters are added to or removed from the foregoing formula (for example, bandwidth used by the terminal device is added, or the spectral efficiency is removed). This is not limited herein.

In a possible implementation, the M terminal devices are included in K terminal devices among the N terminal devices, and K is greater than or equal to M. Before the network device sends the signals to or receives the signals from the M terminal devices among the N terminal devices based on the priorities of the N terminal devices, the method further includes: The network device determines the K terminal devices based on the quantities of to-be-transmitted frames of the N terminal devices and fourth information, where the fourth information indicates a threshold of a quantity of to-be-transmitted frames. Specifically, after filtering the N terminal devices based on the threshold indicated by the fourth information to obtain the K terminal devices, the network device may determine the M terminal devices from the K terminal devices based on the first information. Quantities of to-be-transmitted frames of some terminal devices among the quantities of to-be-transmitted frames of the N terminal devices being greater than the threshold indicated by the fourth information indicates that a quantity of terminal devices currently accessing the network device is greater than a quantity of users that can be supported by a system capacity. The foregoing filtering process performed based on the fourth information can prevent an excessively large quantity of users or an excessively poor user from accessing a system, to avoid impact on overall transmission of users, and increase the system capacity.

Optionally, the foregoing formula mainly includes a calculation process for filtering terminal devices. Correspondingly, the foregoing technical solution may be referred to as a user admission calculation process.

In a possible implementation, determining the K terminal devices based on the quantities of to-be-transmitted frames of the N terminal devices and the fourth information includes: when a quantity of terminal devices, among the N terminal devices, whose quantities of to-be-transmitted frames are greater than the threshold is greater than or equal to a first threshold, excluding, from the N terminal devices, N-K terminal devices whose quantities of transmitted frames are ranked in the top N-K, to determine the K terminal devices; and/or when a quantity of terminal devices, among the N terminal devices, whose quantities of to-be-transmitted frames are greater than the threshold is less than or equal to a second threshold, determining the N terminal devices as the K terminal devices. Specifically, the terminal device may implement a process of filtering the N terminal devices based on the threshold indicated by the fourth information, and may determine the K terminal devices from the N terminal devices in the foregoing plurality of manners.

Optionally, the first threshold is greater than or equal to the second threshold.

Optionally, a difference between N and K is 1, or a difference between N and K is greater than 1.

According to the technical solution shown in FIG. 3, after the network device receives the N pieces of first information in step S301, the network device may respectively determine the quantities of to-be-transmitted frames of the N terminal devices based on the N pieces of first information in step S302. Then the network device may determine the priorities of the N terminal devices based on the quantities of to-be-transmitted frames of the N terminal devices, and send the signals to or receive the signals from the M terminal devices among the N terminal devices based on the priorities. In other words, the network device sends a signal to or receives a signal from a terminal device based on a quantity of to-be-transmitted frames of the terminal device, that is, the network device schedules the signal of the terminal device based on the quantity of to-be-transmitted frames of the terminal device. Because a quantity of to-be-transmitted frames of a terminal device is associated with time validity of service data of the terminal device, the network device schedules a signal of the terminal device based on the quantity of to-be-transmitted frames of the terminal device, to avoid, to some extent, a problem that the signal of the terminal device cannot be transmitted within a specified delay requirement, and improve user experience.

In addition, the foregoing technical solution may be a substitution for the scheduling solution implemented based on the PF algorithm. User admission, frame priorities, packet priorities, and the like are comprehensively considered, priorities of terminal devices that are waiting for scheduling at a current scheduling moment are calculated, the terminal devices are sorted based on the priorities, and then resources are allocated to the terminal devices based on the sorting.

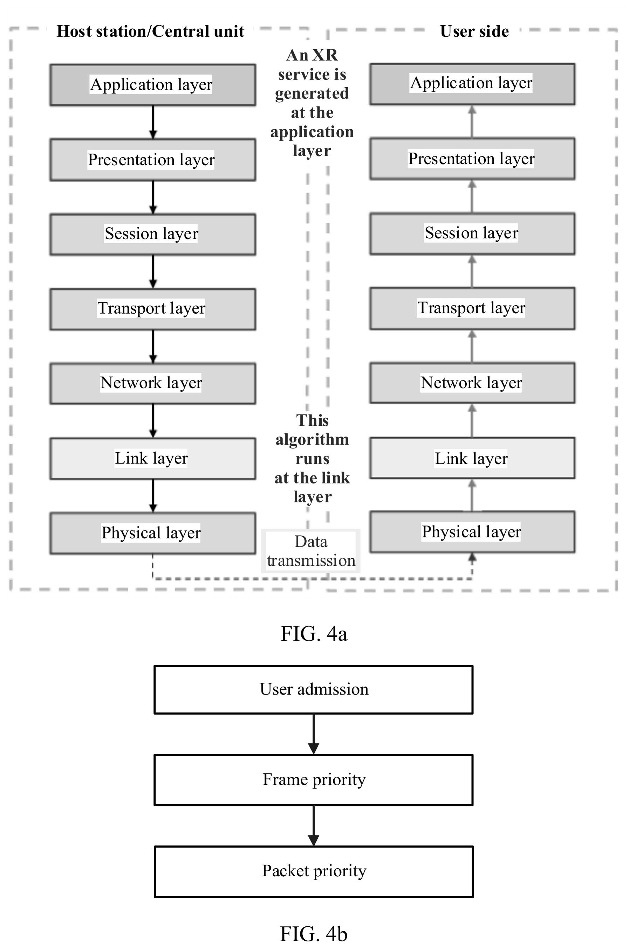

In an implementation example, as shown in FIG. 4a, for example, the network device is a host station/central unit, and the terminal device is a user side. An open system interconnection (open system interconnection, OSI) communication reference model between the host station/central unit and the user side includes an application layer, a presentation layer, a session layer, a transport layer, a network layer, a link layer, and a physical layer shown in FIG. 4a. When the foregoing technical solution is applied to an XR scenario, the to-be-transmitted frame may be specifically a data frame of an XR service. The XR service is generated at the application layer, and data transmission (to be specific, the data/signal sending and receiving processes in step S301 and step S302) may be subsequently implemented at the physical layer. In addition, in the technical solution shown in FIG. 3, a process in which the network device determines a priority may be located at the link layer.

In an implementation example, as shown in FIG. 4b, the network device may include at least one of a user admission calculation module, a frame priority calculation module, and a packet priority processing module.

In some implementations, the user admission calculation module is configured to: When a quantity of users of a cell is greater than a quantity of users that can be supported by a system capacity, the user admission module in the foregoing technical solution filters users, to prevent an excessively large quantity of users or an excessively poor user from accessing a system and affecting overall transmission of users.

In some implementations, the frame priority calculation module is configured to: After a user accesses the system, a frame may arrive based on service distribution. A data amount of each frame may simultaneously arrive at a given moment. A frame satisfaction rate requirement may be met when a user receives a specific proportion of frames. To be specific, the user may not need to receive all frames. Therefore, some frames of a same user may not need to be transmitted. During frame priority calculation, importance of frames of the user is calculated and sorted, and a frame with a high priority is preferentially scheduled.

In some implementations, the packet priority calculation module is configured to: For a given frame, data of the frame may simultaneously arrive. However, due to a limited transmission capability, the frame may be distributed to different time units (for example, slots or symbols) for transmission in units of packets. In a same time unit, frames of a plurality of users may contend for a channel. Transmitted parts of a frame of each user are different. For packet priorities, priorities of current packets of frames of different users may be given based on the following information: a transmission capability of a current channel, an amount of transmitted data of a frame of each user, an amount of remaining data to be transmitted, elapsed transmission duration, remaining transmission duration, and the like.

In some implementations, when each time unit starts, each user may have a plurality of video frames waiting for transmission, and a priority of the user depends on a priority of a frame to which a first packet in a queue of the user belongs, and also depends on a priority of each packet.

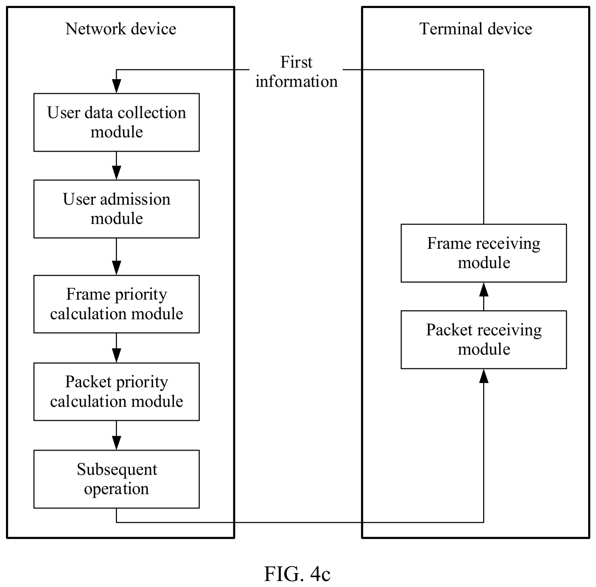

In an implementation example, as shown in FIG. 4c, the network device may include the following modules:

(1) User data collection module: This module includes two functions:

(a) receiving first information, and updating a length of a virtual queue based on a frame completion status indicated by the first information, where for example, when a terminal device successfully receives one frame, a length of a virtual queue corresponding to the terminal device decreases by 1; and

(b) collecting wait time of a first packet in a service queue of each terminal device, and calculating average wait time of all terminal devices.

(2) User admission module, configured to determine whether to admit a terminal device based on a length of a virtual queue of the terminal device:

(a) when a virtual queue of a terminal device exceeds a warning threshold, silencing the terminal device; and
(b) when lengths of virtual queues of all terminal devices are less than the warning threshold, activating a silent terminal device.

(3) Frame priority calculation module, configured to: when a new frame arrives at a given terminal device, provide a priority of a current frame of the current terminal device based on a length of a virtual queue of the terminal device and spectral efficiency of the terminal device.

(4) Packet priority calculation module: This module includes two functions:

(a) for a first packet in a queue of each terminal device, calculating a packet priority of the terminal device based on wait time of the first packet in the queue, average wait time of all terminal devices, and a current channel status; and
(b) providing a final priority of the terminal device based on a frame priority and the packet priority of the terminal device.

(5) Subsequent operation of the network device: A priority order determines an order of subsequent grouping and resource block group (resource block group, RBG) allocation, and a terminal device with a high priority is preferentially scheduled for transmission. A size of an actually transmitted packet needs to be subtracted from a service queue of the terminal device.

In an implementation example, as shown in FIG. 4c, the terminal device may include the following modules:

(1) Packet receiving unit: If a packet of a terminal device is scheduled by the network device, the terminal device may receive the packet, and the terminal device collects statistics on data of the packet, and detects whether the packet belongs to a last packet of a frame. If yes, the information is transmitted to a frame receiving unit.
(2) Frame receiving unit: If receiving a last packet of a frame, the frame receiving unit transmits the message to the network device.

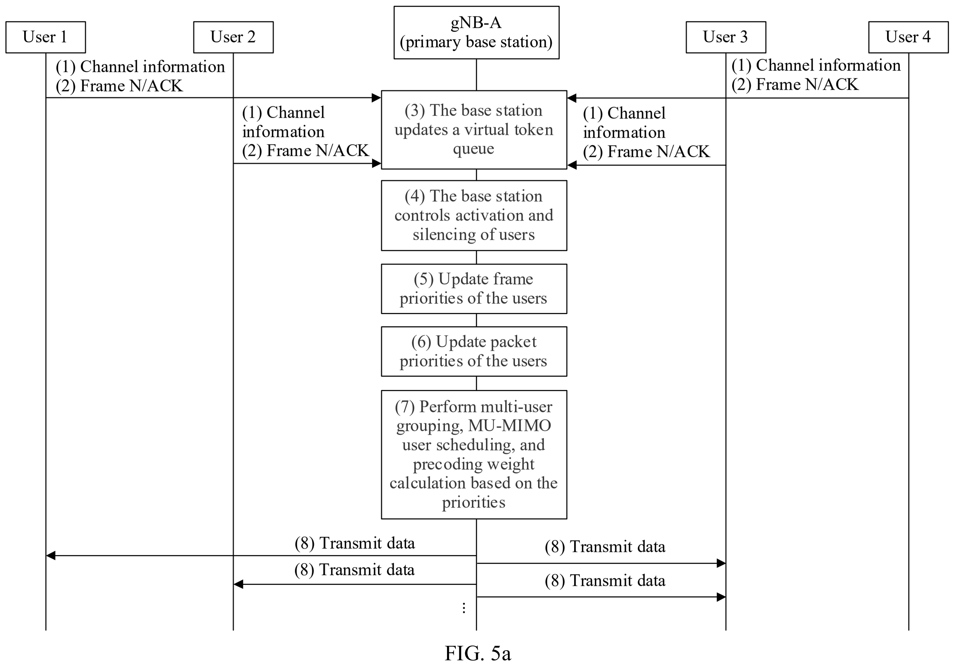

For ease of understanding, the following describes the technical solution shown in FIG. 3 with reference to implementation examples shown in FIG. 5a, FIG. 6, FIG. 7A, and FIG. 7B. In the following implementation examples, an example in which the network device is a primary base station (gNB-A), a quantity of the N terminal devices is 4, and the N terminal devices are denoted as a user 1, a user 2, a user 3, and a user 4 is used for description.

Implementation example 1: As shown in FIG. 5a, the implementation process may be used for downlink scheduling. To be specific, a base station transmits a user XR video frame to a user. The following figure shows a signaling process in which the method shown in FIG. 3 is applied to downlink scheduling. Frame HAQR NACK/HARQ ACK (N/ACK for short) information fed back by a user indicates whether the user successfully receives a downlink frame.

In this mechanism, the base station interacts with the user according to the following process:

1. The user feeds back channel information $c_i$.
2. The user feeds back first information. To be specific, the first information may include N/ACK information of a latest frame.
3. The base station updates a virtual queue based on the N/ACK information of the frame that is fed back by the user. It is assumed that a length of a virtual queue of each user is 0 when TTI=0, and a length of a virtual queue of a user i is $r_{i,tti-1}$, when TTI=tti-1. In this case, when TTI=tti, the length of the virtual queue of the user is updated as follows:

$$r_{i,tti} = r_{i,tti-1} + a_{i,tti} - 1, \text{ for ACK;}$$

and

$$r_{i,tti} = r_{i,tti-1} + a_{i,tti}, \text{ for NACK,}$$

where

$a_{i,tti} \in \{0,1\}$ is a quantity of frames newly arriving at the virtual queue of the user i within a current TTI, and is determined based on an arrival rate of the virtual queue.

4. The base station controls activation and silencing (performed at an interval of 1000 TTIs) of the user based on the updated length of the virtual queue. The length of the virtual queue indicates whether a service currently carried in a cell is lightly loaded or heavily loaded. The base station may actively reject some users or actively activate some users based on the length of the virtual queue:

(A) specifying a virtual queue length threshold thres, and sorting lengths of virtual queues of users;
(B) counting a quantity of users whose virtual queue lengths are greater than the thres threshold, that is, long queue ue num; and
(C) if the quantity of users that exceed the threshold is greater than 2, silencing a user with a longest virtual queue;
or
(D) if the quantity of users that exceed the threshold is 0, activating a user with a shortest virtual queue.

5. The base station calculates a frame priority of the user based on the updated length of the virtual queue. When lengths of virtual queues of two users are close, a user with higher spectral efficiency has a higher priority (to maximize system resources). If the virtual queue is excessively long (indicating that a satisfaction rate of a current frame of the user is excessively low), a priority of the frame of the user is increased. If the virtual queue is excessively short (indicating that a satisfaction rate of a current frame of the user is high), a priority of the frame of the user is decreased. Specifically, it is assumed that an outer-loop priority of the user i is $p_{i,out}$, and a specific calculation manner is as follows:

$$p_{i,out} = c_i * f\left(\frac{r_i - \overline{R}}{\overline{R}\alpha}\right), \text{ or } p_{i,out} = \frac{c_i}{\overline{c_1}} * f\left(\frac{r_i - \overline{R}}{\overline{R}\alpha}\right),$$

where

$c_i$ is current spectral efficiency of the user i, $\overline{c_1}$ is historical average spectral efficiency of the user i, f(.) is a monotonically increasing function, for example, $f(x) = e^x$, $r_i$ is the length of the virtual queue of the user i, $\overline{R}$ is an average queue length of all users, and $\alpha \geq 0$ is an optional parameter.

6. The base station updates a packet priority of a first packet in a current queue of the user. When wait time of first packets in queues of two users is close, a user with higher spectral efficiency has a higher priority. If the wait time is excessively long (indicating that a risk of a frame of the user being discarded increases), a priority of the packet of the user is increased. If the wait time is excessively short, a priority of the packet of the user is decreased. Specifically, it is assumed that an inner-loop priority of the user i is $p_{i,in}$, and a specific calculation manner is as follows:

$$p_{i,in} = c_i * f\left(\frac{w_i - \overline{W}}{\overline{W}\alpha}\right), \text{ or } p_{i,in} = \frac{c_i}{\overline{c_1}} * f\left(\frac{w_i - \overline{W}}{\overline{W}\alpha}\right), \ 0 < \alpha < 1,$$

where

$c_i$ is current spectral efficiency of the user i, $\overline{c_1}$ is historical average spectral efficiency of the user i, f(.) is a monotonically increasing function, for example, $f(x) = e^x$, $w_i$ is wait time of the user i, $\overline{W}$ is average wait time of all users, and $\alpha \geq 1$ is an optional parameter.

7. The base station provides an overall priority of the user based on the frame priority $p_{i,out}$ and the packet priority $p_{i,in}$. Specifically,

$$p_i = \beta_1 p_{i,out} + \beta_2 p_{i,in},$$

where

the parameters $0 < \beta_1 < 1$ and $0 < \beta_2 < 1$ need to satisfy: $\beta_1 + \beta_2 = 1$.

Optionally, after determining priorities of all users, the base station performs, based on the priorities, one or more of the following subsequent calculation processes: grouping, multi-user multiple-input multiple-output (multi-user multiple-input multiple-output, MU-MIMO) user scheduling, precoding weight calculation, and the like; and performs a subsequent downlink data transmission process.

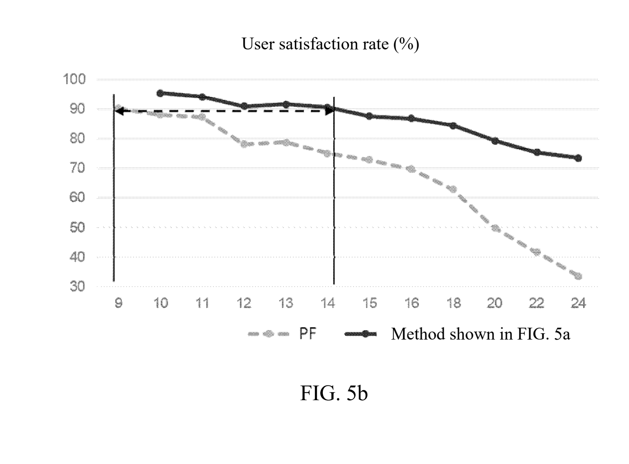

For example, a simulation result of the implementation process shown in FIG. 5a is shown in FIG. 5b. Simulation scenario: 21 cells form a network. A base station and users use MU-MIMO. Services transmitted by the users are XR services. System bandwidth is 20 MHz. Each user has four antennas, and a quantity of streams of the user is adaptive (a maximum of two streams are supported). Implementation effect is shown in FIG. 5b and Table 1.

Table 1

| Indicator | PF | This solution | Increase percentage |
|---|---|---|---|
| Maximum quantity of supported users (with a satisfaction rate of 90%) | 9.08 | 14.2 | 56.39% |
| Average frame satisfaction rate of users | 67.09% | 86.36% | 28.74% |

It can be learned that, compared with the existing PF algorithm, in the foregoing priority determining mechanism, the maximum quantity of supported users increases by 56.39%, and the average frame satisfaction rate of users increases by 19.26%. In this solution, a priority of a first packet in a current queue of a user is provided based on a frame receiving rate of the user, wait time of the first packet in the queue of the user, channel quality and the like from the following three perspectives: user admission, a frame priority, and a packet priority. Complexity is low.

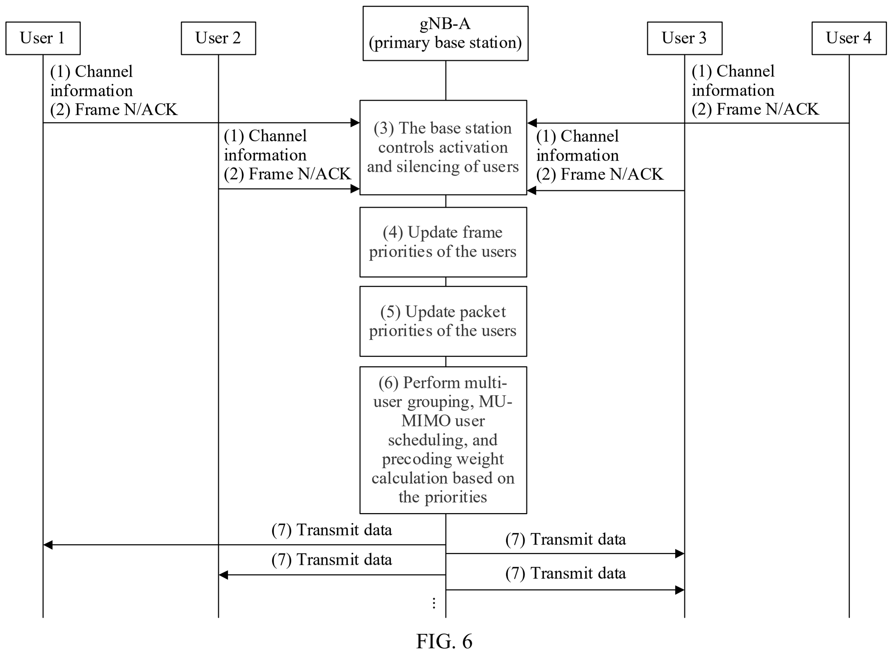

Implementation example 2: As shown in FIG. 6, the implementation process may be used for downlink scheduling. To be specific, a base station transmits a user XR video frame to a user. FIG. 6 shows a signaling process applied to downlink scheduling. Frame satisfaction rate information fed back by a user indicates a quantity of frames successfully received by the user (a calculation method for a frame satisfaction rate is as follows: the quantity of frames successfully received by the user/a quantity of frames that needs to be successfully received to make the user be referred to as a satisfied user). In addition, interaction information between the user and the base station does not specify how to feed back the frame satisfaction rate. This solution needs to be supported by a standard. For example, 4 bits in a PUCCH/PUSCH of the user are reserved to transmit the frame satisfaction rate.

In this example, the base station interacts with the user according to the following process:

1. The user feeds back channel information $c_i$ and a frame satisfaction rate of the user.
2. The base station controls activation and silencing (for example, performed at an interval of 1000 TTIs) of the user based on the frame satisfaction rate fed back by the user. Frame satisfaction rates of all users exceeding a given threshold indicates that a cell is lightly loaded, and the base station actively activates a user with a highest frame satisfaction rate among current silent users. An average frame satisfaction rate of users being less than a given threshold indicates a cell is heavily loaded, and the base station actively silences a user with a lowest frame satisfaction rate among current active users.
3. A frame priority of the user is calculated based on the frame satisfaction rate. When frame satisfaction rates of two users are close, a user with higher spectral efficiency has a higher priority (to maximize system resources). If the frame satisfaction rate is excessively low (indicating that a satisfaction rate of a current frame of the user is excessively low), a priority of the frame of the user is increased. If a virtual queue is excessively long (indicating that a satisfaction rate of a current frame of the user is low), a priority of the frame of the user is increased.
4. The base station updates a packet priority of a first packet in a current queue of the user. When wait time of first packets in queues of two users is close, a user with higher spectral efficiency has a higher priority. If the wait time is excessively long (indicating that a risk of a frame of the user being discarded increases), a priority of the packet of the user is increased. If the wait time is excessively short, a priority of the packet of the user is decreased.
5. The base station provides an overall priority of the user based on the frame priority and the packet priority. Subsequent grouping, MU-MIMO user scheduling, and precoding weight calculation are performed on data of all users based on given priorities.

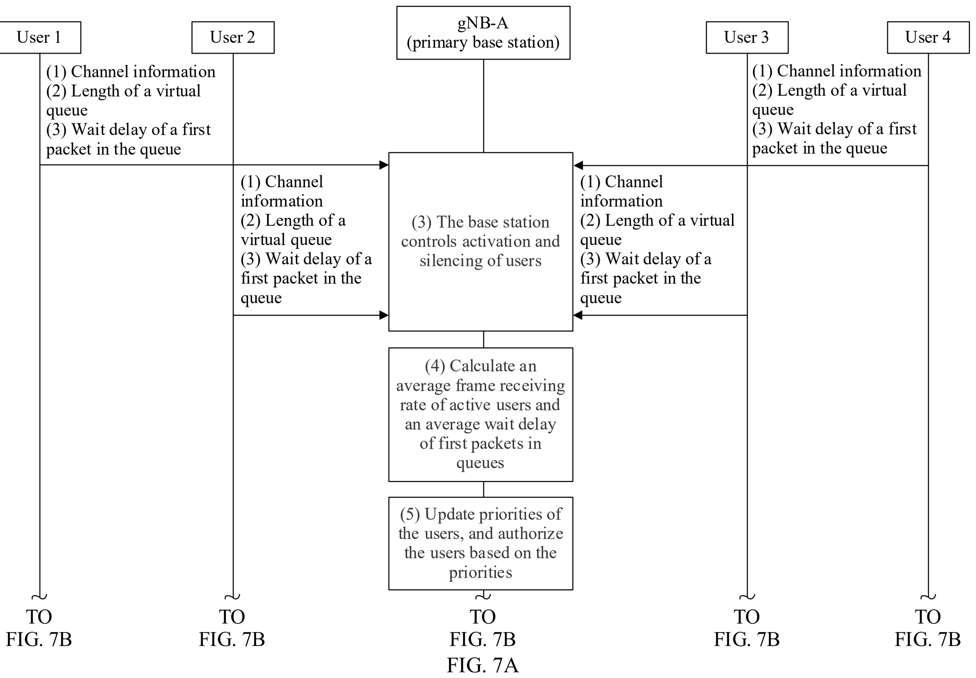

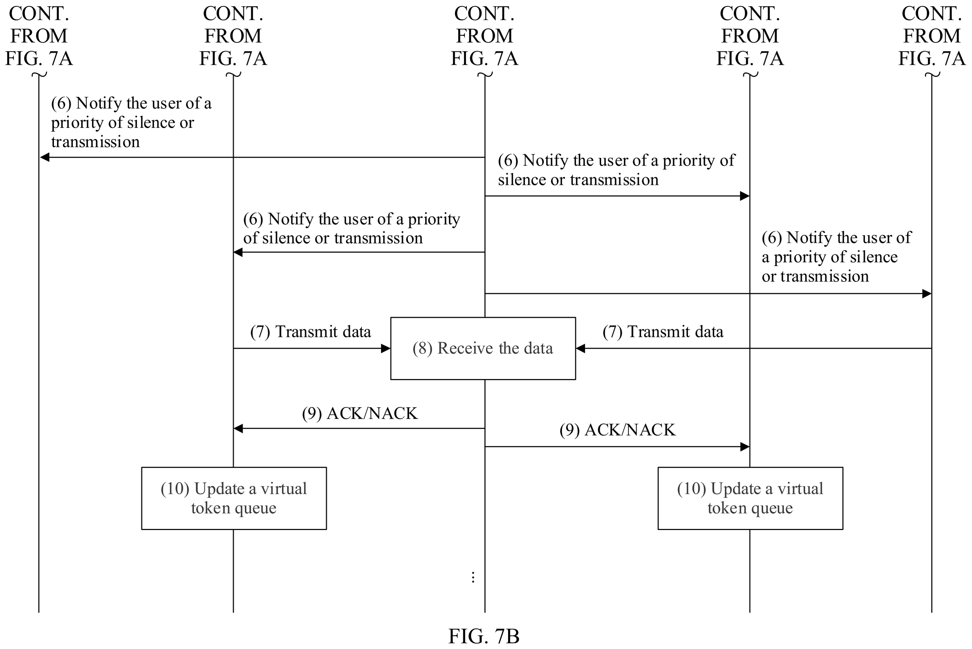

Implementation example 3: As shown in FIG. 7A and FIG. 7B, the implementation process may be used for uplink scheduling. To be specific, a user transmits an XR video frame to a base station. The following figure shows a signaling process applied to uplink scheduling. A user needs to feed back a length of a virtual queue and a wait delay of a first packet in the queue. That the user feeds back the length of the virtual queue and the wait delay of the first packet in the queue needs to be supported by a standard. For example, some (for example, 8) bit information in a physical downlink shared channel (physical downlink shared channel, PDSCH)/physical uplink shared channel (physical uplink shared channel, PUSCH) is reserved for transmission. A part (for example, 4) of bits are used to transmit the queue length, and the other part (for example, 4) of bits are used to transmit the wait delay.

In this example, the base station interacts with the user according to the following process:

1. The user feeds back channel information $c_i$, the length of the virtual queue, and the wait delay of the first packet in the queue.

2. The base station controls activation and silencing (performed at an interval of 1000 TTIs) of the user based on the length of the virtual queue fed back by the user. Frame satisfaction rates of all users exceeding a given threshold indicates that a cell is lightly loaded, and the base station actively activates a user with a highest frame satisfaction rate among current silent users. An average frame satisfaction rate of users being less than a given threshold indicates a cell is heavily loaded, and the base station actively silences a user with a lowest frame satisfaction rate among current active users.

3. The base station calculates an average frame receiving rate of the user and an average wait delay of first packets in queues based on the virtual queue.

4. The base station updates a priority of a first packet in a current queue of the user. The base station calculates a frame priority and a packet priority of the user based on a frame satisfaction rate. The frame priority may be determined based on the length of the virtual queue, and the packet priority may be determined based on the wait time of the first packet in the queue. A priority of the user is determined based on both the frame priority and the packet priority.

5. The base station authorizes users in descending order of priorities of the users.

6. An authorized user transmits data.

7. The base station receives the data transmitted by the user, and feeds back a packet receiving status (ACK/NACK) depending on whether the transmission is successful.

It can be learned from the foregoing implementation processes that the communication method provided in this application has the following features or beneficial effects:

In some implementations, the method may be applied to a network device, and may be applied to uplink and downlink.

In some implementations, in the method, multi-user scheduling may be performed through user admission and priority adjustment.

In some implementations, a QoS requirement of an XR user is ensured from three dimensions: user admission, a frame priority of a user, and a packet priority of the user.

In some implementations, a frame-level priority of a user is calculated in the following manner:

$$p_{i,out} = c_i * f\left(\frac{r_i - \overline{R}}{\overline{R}\alpha}\right),$$

or $p_{out} = \frac{c_i}{\overline{c}_i} * f\left(\frac{r_i - \overline{R}}{\overline{R}\alpha}\right)$, where f(.) is a monotonically increasing function, and $\alpha > 0$.

In some implementations, a packet-level priority of a user is calculated in the following manner:

$$p_{i,in} = c_i * f\left(\frac{w_i - \overline{W}}{\overline{W}\alpha}\right), \quad p_{in} = \frac{c_i}{\overline{c}_i} * f\left(\frac{w_i - \overline{W}}{\overline{W}\alpha}\right), \quad \alpha > 0.$$

In some implementations, the network device determines priorities of all users within each TTI in the following manner:

$$p_i = \beta_1 p_{i,out} + \beta_2 p_{i,in}, \quad 0 < \beta_1 < 1, \quad 0 < \beta_2 < 1, \quad \beta_1 + \beta_2 = 1.$$

Meanings of the parameters are shown in Table 2.

Table 2

| $i$ | A subscript of a user |
|---|---|
| $p_{i,out}$ | A frame-level priority/outer-loop priority |
| $p_{i,in}$ | A packet-level priority/inner-loop priority |
| $c_i$ | Spectral efficiency of a user i |
| $r_i$ | A length of a virtual queue of the user i |
| $\overline{R}$ | An average length of virtual queues of all users |
| $w_i$ | Wait time of the user i |
| $\overline{W}$ | Average wait time of all users |

(continued)

| $\alpha$ | Parameter: $\alpha > 0$<br>Parameter value: $\alpha = 1$ |
|---|---|
| $\beta_1$ and $\beta_2$ | Parameters: $0 < \beta_1 < 1$ and $0 < \beta_2 < 1$, $\beta_1 + \beta_2 = 1$<br>Parameter values: $\beta_1 = \beta_2 = 0.5$ |
| f(.) | A monotonically increasing function, where a reference function is as follows: $f(x) = e^x$ |

In some implementations, a frame throughput and delay QoS of an XR user are ensured by using a three-layer mechanism: user admission, outer-loop frame control, and inner-loop packet control. In comparison with the conventional PF algorithm, a user performs feedback, a base station collects statistics on a frame satisfaction rate of the user, and the base station collects statistics on a wait delay of a first packet in a queue. In this case, calculation complexity is o(n). However, a historical throughput of each user (a denominator of the conventional PF algorithm) does not need to be collected, and complexity is low.

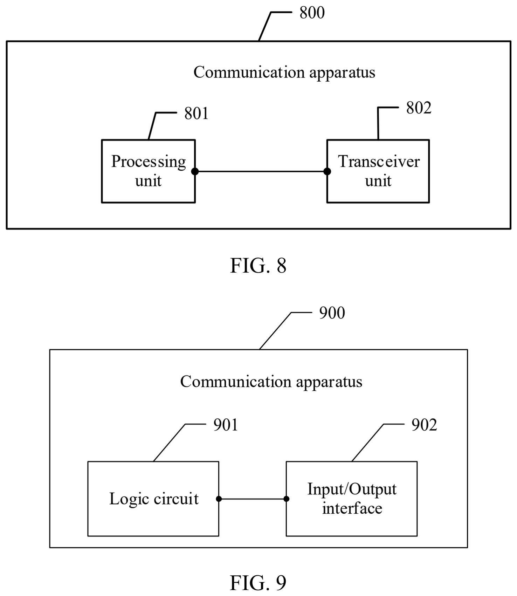

As shown in FIG. 8, an embodiment of this application provides a communication apparatus 800. The communication apparatus 800 may implement the functions of the terminal device (or the network device) in the foregoing method embodiments, and therefore can also achieve the beneficial effects of the foregoing method embodiments. In this embodiment of this application, the communication apparatus 800 may be a terminal device (or a network device), or may be an integrated circuit, an element, or the like in a terminal device (or a network device), for example, a chip. In the following embodiments, an example in which the communication apparatus 800 is the terminal device (or the network device) is used for description.

In a possible implementation, when the apparatus 800 is configured to perform the method performed by the network device in any one of the foregoing embodiments, the apparatus 800 includes a processing unit 801 and a transceiver unit 802. The transceiver unit 802 is configured to receive N pieces of first information, where the N pieces of first information are respectively used to determine quantities of to-be-transmitted frames of N terminal devices, and N is an integer greater than 1. The processing unit 801 is configured to send signals to or receive signals from M terminal devices among the N terminal devices based on priorities of the N terminal devices, where the priorities of the N terminal devices are determined based on the quantities of to-be-transmitted frames of the N terminal devices, the signals of the M terminal devices are used to carry a part or all of to-be-transmitted frames of the M terminal devices, and M is an integer less than or equal to N.

In a possible implementation, the to-be-transmitted frames of the N terminal devices are downlink frames, and the N pieces of first information respectively indicate quantities of transmitted frames successfully received by the N terminal devices.

In a possible implementation, the first information includes at least one of a hybrid automatic repeat request acknowledgement HARQ ACK, a hybrid automatic repeat request negative acknowledgement HARQ NACK, and frame satisfaction rate information, and the frame satisfaction rate information is determined based on a quantity of successfully received frames and a quantity of frames expected to be successfully received.

In a possible implementation, that the N pieces of first information are respectively used to determine the quantities of to-be-transmitted frames of the N terminal devices includes: The N pieces of first information and N pieces of second information are used to determine the quantities of to-be-transmitted frames of the N terminal devices, and the N pieces of second information indicate service arrival rates of the N terminal devices and/or frame satisfaction rate requirements of the N terminal devices.

In a possible implementation, the to-be-transmitted frames of the N terminal devices are uplink frames, and the N pieces of first information respectively indicate the quantities of to-be-transmitted frames of the N terminal devices.

In a possible implementation, that the priorities of the N terminal devices are determined based on the quantities of to-be-transmitted frames of the N terminal devices includes: Sending priorities or receiving priorities of the N terminal devices are determined based on the quantities of to-be-transmitted frames of the N terminal devices, where the sending priorities or the receiving priorities of the N terminal devices are positively correlated with the quantities of to-be-transmitted frames of the N terminal devices.

In a possible implementation, the sending priorities or the receiving priorities of the N terminal devices are positively correlated with spectral efficiency of the N terminal devices.

In a possible implementation, a sending priority or a receiving priority $p_{i,1}$ of an $i^{th}$ terminal device among the N terminal devices satisfies:

$$p_{i,1} = c_i * f\left(\frac{r_i - \bar{R}}{\bar{R}^\alpha}\right);$$

or

$$p_{i,1} = \frac{c_i}{\overline{c_1}} * f\left(\frac{r_i - \overline{R}}{\overline{R}^\alpha}\right),$$

where

$c_i$ indicates spectral efficiency of the $i^{th}$ terminal device, $\overline{c_1}$ indicates historical average spectral efficiency of the $i^{th}$ terminal device, $r_i$ indicates a quantity of to-be-transmitted frames of the $i^{th}$ terminal device, $\overline{R}$ indicates an average value of the quantities of to-be-transmitted frames of the N terminal devices, $\alpha$ is an optimization parameter, and $f\left(\frac{r_i - \overline{R}}{\overline{R}^\alpha}\right)$ indicates a monotonically increasing function with respect to $\frac{r_i - \overline{R}}{\overline{R}^\alpha}$.

In a possible implementation, that the priorities of the N terminal devices are determined based on the quantities of to-be-transmitted frames of the N terminal devices includes: The priorities of the N terminal devices are determined based on the quantities of to-be-transmitted frames of the N terminal devices and first-packet wait duration of the to-be-transmitted frames of the N terminal devices. The transceiver unit 802 is further configured to receive N pieces of third information, where the N pieces of third information are respectively used to determine the first-packet wait duration of the to-be-transmitted frames of the N terminal devices.

In a possible implementation, the to-be-transmitted frames of the N terminal devices are downlink frames, and the N pieces of third information respectively indicate arrival moments of the to-be-transmitted frames of the N terminal devices; and/or the to-be-transmitted frames of the N terminal devices are uplink frames, and the N pieces of third information respectively indicate the first-packet wait duration of the to-be-transmitted frames of the N terminal devices.

In a possible implementation, that the priorities of the N terminal devices are determined based on the quantities of to-be-transmitted frames of the N terminal devices and the first-packet wait duration of the to-be-transmitted frames of the N terminal devices includes: Sending priorities or receiving priorities of the N terminal devices are determined based on the quantities of to-be-transmitted frames of the N terminal devices and the first-packet wait duration of the to-be-transmitted frames of the N terminal devices, where the sending priorities or the receiving priorities of the N terminal devices are positively correlated with the quantities of to-be-transmitted frames of the N terminal devices, and the sending priorities or the receiving priorities of the N terminal devices are positively correlated with lengths of the first-packet wait duration of the to-be-transmitted frames of the N terminal devices.

In a possible implementation, the sending priorities or the receiving priorities of the N terminal devices are positively correlated with spectral efficiency of the N terminal devices.

In a possible implementation, a sending priority or a receiving priority $p_i$ of an $i^{th}$ terminal device among the N terminal devices satisfies:

$$p_i = c_i * f\left(\frac{r_i - \overline{R}}{\overline{R}^\alpha}\right) + c_i * f\left(\frac{W_i - \overline{W}}{\overline{W}^\alpha}\right);$$

or

$$p_i = \frac{c_i}{\overline{c_1}} * f\left(\frac{r_i - \overline{R}}{\overline{R}^\alpha}\right) + \frac{c_i}{\overline{c_1}} * f\left(\frac{W_i - \overline{W}}{\overline{W}^\alpha}\right),$$

where

$c_i$ indicates spectral efficiency of the $i^{th}$ terminal device, $\overline{c_1}$ indicates historical average spectral efficiency of the $i^{th}$ terminal device, $r_i$ indicates a quantity of to-be-transmitted frames of the $i^{th}$ terminal device, $\overline{R}$ indicates an average value of the quantities of to-be-transmitted frames of the N terminal devices, $\alpha$ is an optimization parameter, $W_i$ indicates first-packet wait duration of the to-be-transmitted frames of the $i^{th}$ terminal device, $\overline{W}$ indicates an average value of first-packet wait duration of to-be-transmitted frames of an $N^{th}$ terminal device, $f\left(\frac{r_i - \overline{R}}{\overline{R}^\alpha}\right)$ indicates a monotonically increasing function with respect to $\frac{r_i - \overline{R}}{\overline{R}^\alpha}$, and $f\left(\frac{W_i - \overline{W}}{\overline{W}^\alpha}\right)$ indicates a monotonically increasing function with respect to $\frac{W_i - \overline{W}}{\overline{W}^\alpha}$.

In a possible implementation, the M terminal devices are included in K terminal devices among the N terminal devices, and K is greater than or equal to M. The processing unit 801 is further configured to determine the K terminal devices based on the quantities of to-be-transmitted frames of the N terminal devices and fourth information, where the fourth information indicates a threshold of a quantity of to-be-transmitted frames.

In a possible implementation, the processing unit 801 is specifically configured to: when a quantity of terminal devices, among the N terminal devices, whose quantities of to-be-transmitted frames are greater than the threshold is greater than or equal to a first threshold, exclude, from the N terminal devices, N-K terminal devices whose quantities of transmitted frames are ranked in the top N-K, to determine the K terminal devices; and/or the processing unit 801 is specifically configured to: when a quantity of terminal devices, among the N terminal devices, whose quantities of to-be-transmitted frames are greater than the threshold is less than or equal to a second threshold, determine the N terminal devices as the K terminal devices.

In a possible implementation, a difference between N and K is 1.

In a possible implementation, when the apparatus 800 is configured to perform the method performed by the first terminal device in any one of the foregoing embodiments, the apparatus 800 includes a processing unit 801 and a transceiver unit 802. The processing unit 801 is configured to determine first information, where the first information is used to determine a quantity of to-be-transmitted frames of a first terminal device, the first terminal device is included in N terminal devices, and priorities of the N terminal devices are determined based on quantities of to-be-transmitted frames of the N terminal devices. The transceiver unit 802 is configured to send the first information.

In a possible implementation, the to-be-transmitted frames of the first terminal device are downlink frames, and the first information indicates a quantity of transmitted frames successfully received by the first terminal device.

In a possible implementation, the first information includes at least one of a hybrid automatic repeat request acknowledgement HARQ ACK, a hybrid automatic repeat request negative acknowledgement HARQ NACK, and frame satisfaction rate information, and the frame satisfaction rate information is determined based on a quantity of successfully received frames and a quantity of frames expected to be successfully received.

In a possible implementation, the to-be-transmitted frames of the first terminal device are uplink frames, and the first information indicates the quantity of to-be-transmitted frames of the first terminal device.

In a possible implementation, that the priorities of the N terminal devices are determined based on the quantities of to-be-transmitted frames of the N terminal devices includes: Sending priorities or receiving priorities of the N terminal devices are determined based on the quantities of to-be-transmitted frames of the N terminal devices, where the sending priorities or the receiving priorities of the N terminal devices are positively correlated with the quantities of to-be-transmitted frames of the N terminal devices.

In a possible implementation, the sending priorities or the receiving priorities of the N terminal devices are positively correlated with spectral efficiency of the N terminal devices.

In a possible implementation, that the priorities of the N terminal devices are determined based on the quantities of to-be-transmitted frames of the N terminal devices includes: The priorities of the N terminal devices are determined based on the quantities of to-be-transmitted frames of the N terminal devices and first-packet wait duration of the to-be-transmitted frames of the N terminal devices. The transceiver unit 802 is further configured to send third information, where the third information is used to determine first-packet wait duration of the to-be-transmitted frames of the first terminal device.

In a possible implementation, the to-be-transmitted frames of the N terminal devices are downlink frames, and the third information indicates arrival moments of the to-be-transmitted frames of the first terminal device; and/or the to-be-transmitted frames of the N terminal devices are uplink frames, and the third information indicates the first-packet wait duration of the to-be-transmitted frames of the first terminal device.

In a possible implementation, that the priorities of the N terminal devices are determined based on the quantities of to-be-transmitted frames of the N terminal devices and the first-packet wait duration of the to-be-transmitted frames of the N terminal devices includes: Sending priorities or receiving priorities of the N terminal devices are determined based on the quantities of to-be-transmitted frames of the N terminal devices and the first-packet wait duration of the to-be-transmitted frames of the N terminal devices, where the sending priorities or the receiving priorities of the N terminal devices are positively correlated with the quantities of to-be-transmitted frames of the N terminal devices, and the sending priorities or the receiving priorities of the N terminal devices are positively correlated with lengths of the first-packet wait duration of the to-be-transmitted frames of the N terminal devices.

In a possible implementation, the sending priorities or the receiving priorities of the N terminal devices are positively correlated with spectral efficiency of the N terminal devices.

It should be noted that, for details about content such as information execution processes of the units of the communication apparatus 800, reference may be made to the descriptions in the foregoing method embodiments of this application. Details are not described herein again.

FIG. 9 is another diagram of a structure of a communication apparatus 900 according to this application. The communication apparatus 900 includes at least an input/output interface 902. The communication apparatus 900 may be a chip or an integrated circuit.

Optionally, the communication apparatus further includes a logic circuit 901.

The transceiver unit 802 shown in FIG. 8 may be a communication interface. The communication interface may be the input/output interface 902 in FIG. 9, and the input/output interface 902 may include an input interface and an output interface. Alternatively, the communication interface may be a transceiver circuit, and the transceiver circuit may include an input interface circuit and an output interface circuit.

Optionally, the input/output interface 902 is configured to receive N pieces of first information, where the N pieces of first information are respectively used to determine quantities of to-be-transmitted frames of N terminal devices, and N is an integer greater than 1; and the logic circuit 901 is configured to send signals to or receive signals from M terminal devices among the N terminal devices based on priorities of the N terminal devices, where the priorities of the N terminal devices are determined based on the quantities of to-be-transmitted frames of the N terminal devices, the signals of the M terminal devices are used to carry a part or all of to-be-transmitted frames of the M terminal devices, and M is an integer less than or equal to N.

The logic circuit 901 and the input/output interface 902 may alternatively perform other steps performed by a network device in any embodiment, and achieve corresponding beneficial effects. Details are not described herein again.

Optionally, the logic circuit 901 is configured to determine first information, where the first information is used to determine a quantity of to-be-transmitted frames of a first terminal device, the first terminal device is included in N terminal devices, and priorities of the N terminal devices are determined based on quantities of to-be-transmitted frames of the N terminal devices; and the input/output interface 902 is configured to send the first information.

The logic circuit 901 and the input/output interface 902 may alternatively perform other steps performed by a network device in any embodiment, and achieve corresponding beneficial effects. Details are not described herein again.

In a possible implementation, the processing unit 801 shown in FIG. 8 may be the logic circuit 901 in FIG. 9.

Optionally, the logic circuit 901 may be a processing apparatus. A part or all of functions of the processing apparatus may be implemented by software. A part or all of functions of the processing apparatus may be implemented by software.

Optionally, the processing apparatus may include a memory and a processor. The memory is configured to store a computer program, and the processor reads and executes the computer program stored in the memory, to perform corresponding processing and/or steps in any one of the method embodiments.

Optionally, the processing apparatus may include only a processor. A memory for storing a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field programmable gate arrays (field programmable gate array, FPGA), an application-specific integrated chip (application-specific integrated circuit, ASIC), a system-on-a-chip (system-on-a-chip, SoC), a central processing unit (central processing unit, CPU), a network processor (network processor, NP), a digital signal processing circuit (digital signal processor, DSP), a microcontroller (microcontroller unit, MCU), a programmable logic device (programmable logic device, PLD), or another integrated chip, or any combination of the foregoing chips or processors.

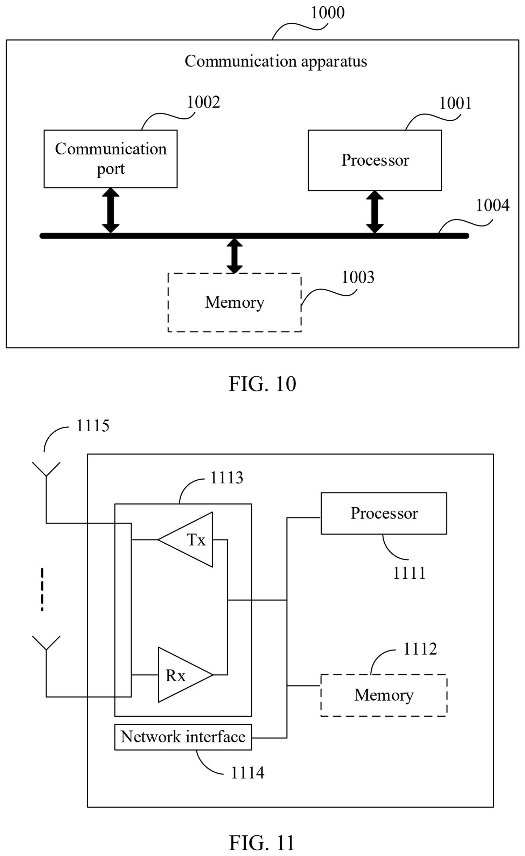

FIG. 10 shows a communication apparatus 1000 used in the foregoing embodiments according to an embodiment of this application. The communication apparatus 1000 may be specifically a communication apparatus serving as a terminal device in the foregoing embodiments. In the example shown in FIG. 10, the terminal device is implemented by using a terminal device (or a component in a terminal device).

In a diagram of a possible logical structure of the communication apparatus 1000, the communication apparatus 1000 may include but is not limited to at least one processor 1001 and a communication port 1002.

Further, optionally, the apparatus may further include at least one of a memory 1003 and a bus 1004. In this embodiment of this application, the at least one processor 1001 is configured to control an action of the communication apparatus 1000.

In addition, the processor 1001 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors for implementing a computing function, for example, a combination of one or more microprocessors, or a combination of a digital signal processor and a microprocessor. It can be clearly understood by a person skilled in the art that, for ease and brevity of description, for detailed working processes of the foregoing systems, apparatuses, and units, reference may be made to corresponding processes in the foregoing method embodiments. Details are not described herein again.

It should be noted that the communication apparatus 1000 shown in FIG. 10 may be specifically configured to implement the steps implemented by the terminal device in the foregoing method embodiments, and achieve the technical effects corresponding to the terminal device. For a specific implementation of the communication apparatus shown in FIG. 10, refer to the descriptions in the foregoing method embodiments. Details are not described herein again.

FIG. 11 is a diagram of a structure of a communication apparatus 1100 used in the foregoing embodiments according to an embodiment of this application. The communication apparatus 1100 may be specifically a communication apparatus serving as a network device in the foregoing embodiments. For a structure of the communication apparatus, refer to the structure shown in FIG. 11.

The communication apparatus 1100 includes at least one processor 1111 and at least one network interface 1114. Further, optionally, the communication apparatus further includes at least one memory 1112, at least one transceiver 1113, and one or more antennas 1115. The processor 1111, the memory 1112, the transceiver 1113, and the network interface 1114 are connected, for example, connected through a bus. In this embodiment of this application, the connection may include various interfaces, transmission lines, buses, or the like. This is not limited in this embodiment. The antenna 1115 is connected to the transceiver 1113. The network interface 1114 is configured to enable the communication apparatus to communicate with another communication device through a communication link. For example, the network interface 1114 may include a network interface between the communication apparatus and a core network device, for example, an S1 interface. The network interface may include a network interface between the communication apparatus and another communication apparatus (for example, another network device or core network device), for example, an X2 or Xn interface.

The processor 1111 is mainly configured to process a communication protocol and communication data, control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to control an entire terminal device, execute the software program, and process the data of the software program. Functions of the baseband processor and the central processing unit may be integrated into the processor 1111 in FIG. 11. A person skilled in the art can understand that the baseband processor and the central processing unit may alternatively be processors independent of each other, and are interconnected through a technology like a bus. A person skilled in the art can understand that the terminal device may include a plurality of baseband processors to adapt to different network standards, the terminal device may include a plurality of central processing units to enhance a processing capability of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1112 may exist independently, and is connected to the processor 1111. Optionally, the memory 1112 and the processor 1111 may be integrated together, for example, integrated into one chip. The memory 1112 can store program code for performing the technical solutions in embodiments of this application, and execution of the program code is controlled by the processor 1111. Various types of executed computer program code may also be considered as a driver of the processor 1111.

FIG. 11 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1113 may be configured to support receiving or sending of a radio frequency signal between the communication apparatus and a terminal. The transceiver 1113 may be connected to the antenna 1115. The transceiver 1113 includes a transmitter Tx and a receiver Rx. Specifically, the one or more antennas 1115 may receive a radio frequency signal. The receiver Rx of the transceiver 1113 is configured to receive the radio frequency signal from the antenna, convert the radio frequency signal into a digital baseband signal or a digital intermediate frequency signal, and provide the digital baseband signal or the digital intermediate frequency signal for the processor 1111, so that the processor 1111 further processes the digital baseband signal or the digital intermediate frequency signal, for example, performs demodulation and decoding. In addition, the transmitter Tx of the transceiver 1113 is further configured to receive a modulated digital baseband signal or digital intermediate frequency signal from the processor 1111, convert the modulated digital baseband signal or digital intermediate frequency signal into a radio frequency signal, and send the radio frequency signal through the one or more antennas 1115. Specifically, the receiver Rx may selectively perform one-level or multi-level down frequency mixing and analog-to-digital conversion on the radio frequency signal to obtain the digital baseband signal or the digital intermediate frequency signal. An order of the down frequency mixing and the analog-to-digital conversion is adjustable. The transmitter Tx may selectively perform one-level or multi-level up frequency mixing and digital-to-analog conversion on the modulated digital baseband signal or digital intermediate frequency signal to obtain the radio frequency signal. An order of the up frequency mixing and the digital-to-analog conversion is adjustable. The digital baseband signal and the digital intermediate frequency signal may be collectively referred to as a digital signal.

The transceiver 1113 may also be referred to as a transceiver unit, a transceiver device, a transceiver apparatus, or the like. Optionally, a component that is in the transceiver unit and that is configured to implement a receiving function may be considered as a receiving unit, and a component that is in the transceiver unit and that is configured to implement a sending function may be considered as a sending unit. That is, the transceiver unit includes the receiving unit and the sending unit. The receiving unit may also be referred to as a receiver, an input interface, a receiver circuit, or the like. The sending unit may be referred to as a transmitting device, a transmitter, a transmitter circuit, or the like.

It should be noted that the communication apparatus 1100 shown in FIG. 11 may be specifically configured to implement the steps implemented by the network device in the foregoing method embodiments, and achieve the technical effects corresponding to the network device. For a specific implementation of the communication apparatus 1100 shown in FIG. 11, refer to the descriptions in the foregoing method embodiments. Details are not described herein again.

An embodiment of this application further provides a computer-readable storage medium. When computer-executable instructions in the medium are executed by a processor, the processor performs the method according to the possible implementations of the terminal device in the foregoing embodiments.

An embodiment of this application further provides a computer-readable storage medium. When computer-executable instructions in the medium are executed by a processor, the processor performs the method according to the possible implementations of the network device in the foregoing embodiments.

An embodiment of this application further provides a computer program product (or referred to as a computer program). When the computer program product is executed by a processor, the processor performs the method according to the foregoing possible implementations of the terminal device.

An embodiment of this application further provides a computer program product. When the computer program product is executed by a processor, the processor performs the method according to the foregoing possible implementations of the network device.

An embodiment of this application further provides a chip system. The chip system includes at least one processor, configured to support a communication apparatus in implementing the functions in the foregoing possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the terminal device in the foregoing method embodiments.

An embodiment of this application further provides a chip system. The chip system includes at least one processor, configured to support a communication apparatus in implementing the functions in the foregoing possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the network device in the foregoing method embodiments.

An embodiment of this application further provides a communication system. The communication system includes the terminal device and the network device in any one of the foregoing embodiments.

In the several embodiments provided in this application, it should be understood that the disclosed systems, apparatuses, and methods may be implemented in other manners. For example, the described apparatus embodiments are merely examples. For example, division into the units is merely logical function division. During actual implementation, another division manner may be used. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separated, and components shown as units may or may not be physical units, to be specific, may be located in one place, or may be distributed on a plurality of network units. A part or all of the units may be selected according to actual requirements to achieve the objectives of the solutions of embodiments.

In addition, functional units in embodiments of this application may be integrated into one processing unit, or each unit may exist alone physically, or two or more units may be integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions of this application essentially, or the part making a contribution, or all or a part of the technical solutions may be implemented in a form of a software product. The computer software product is stored in a storage medium and includes several instructions for instructing a computer device (which may be a personal computer, a server, a network device, or the like) to perform all or a part of the steps of the methods described in embodiments of this application. The storage medium includes any medium that can store program code, for example a USB flash drive, a removable hard disk drive, a read-only memory (ROM, Read-Only Memory), a random access memory (RAM, Random Access Memory), a magnetic disk, or an optical disc.

**Claims**

1. A communication method, comprising:

   receiving N pieces of first information, wherein the N pieces of first information are respectively used to determine quantities of to-be-transmitted frames of N terminal devices, and N is an integer greater than 1; and
   sending signals to or receiving signals from M terminal devices among the N terminal devices based on priorities of the N terminal devices, wherein the priorities of the N terminal devices are determined based on the quantities of to-be-transmitted frames of the N terminal devices, the signals of the M terminal devices are used to carry a part or all of to-be-transmitted frames of the M terminal devices, and M is an integer less than or equal to N.

2. The method according to claim 1, wherein the to-be-transmitted frames of the N terminal devices are downlink frames, and the N pieces of first information respectively indicate quantities of transmitted frames successfully received by the N terminal devices.

3. The method according to claim 2, wherein the first information comprises at least one of a hybrid automatic repeat request acknowledgement HARQ ACK, a hybrid automatic repeat request negative acknowledgement HARQ NACK, and frame satisfaction rate information, and the frame satisfaction rate information is determined based on a quantity of successfully received frames and a quantity of frames expected to be successfully received.

4. The method according to claim 2 or 3, wherein that the N pieces of first information are respectively used to determine the quantities of to-be-transmitted frames of the N terminal devices comprises:
   the N pieces of first information and N pieces of second information are used to determine the quantities of to-be-transmitted frames of the N terminal devices, and the N pieces of second information respectively indicate service arrival rates of the N terminal devices and/or frame satisfaction rate requirements of the N terminal devices.

5. The method according to claim 1, wherein the to-be-transmitted frames of the N terminal devices are uplink frames, and the N pieces of first information respectively indicate the quantities of to-be-transmitted frames of the N terminal devices.

6. The method according to any one of claims 1 to 5, wherein that the priorities of the N terminal devices are determined based on the quantities of to-be-transmitted frames of the N terminal devices comprises:
   sending priorities or receiving priorities of the N terminal devices are determined based on the quantities of to-be-transmitted frames of the N terminal devices, wherein the sending priorities or the receiving priorities of the N terminal devices are positively correlated with the quantities of to-be-transmitted frames of the N terminal devices.

7. The method according to claim 6, wherein a sending priority or a receiving priority $p_{i,1}$ of an $i^{th}$ terminal device among the N terminal devices satisfies:

$$p_{i,1} = c_i * f\left(\frac{r_i - \overline{R}}{\overline{R}^\alpha}\right);$$

or

$$p_{i,1} = \frac{c_i}{\overline{c_i}} * f\left(\frac{r_i - \overline{R}}{\overline{R}^\alpha}\right),$$

wherein
$c_i$ indicates spectral efficiency of the $i^{th}$ terminal device, $\overline{c_i}$ indicates historical average spectral efficiency of the $i^{th}$ terminal device, $r_i$ indicates a quantity of to-be-transmitted frames of the $i^{th}$ terminal device, $\overline{R}$ indicates an average value of the quantities of to-be-transmitted frames of the N terminal devices, $\alpha$ is an optimization parameter, and $f\left(\frac{r_i - \overline{R}}{\overline{R}^\alpha}\right)$ indicates a monotonically increasing function with respect to $\frac{r_i - \overline{R}}{\overline{R}^\alpha}$.

8. The method according to any one of claims 1 to 5, wherein that the priorities of the N terminal devices are determined based on the quantities of to-be-transmitted frames of the N terminal devices comprises:

the priorities of the N terminal devices are determined based on the quantities of to-be-transmitted frames of the N terminal devices and first-packet wait duration of the to-be-transmitted frames of the N terminal devices; and the method further comprises:
receiving N pieces of third information, wherein the N pieces of third information are respectively used to determine the first-packet wait duration of the to-be-transmitted frames of the N terminal devices.

9. The method according to claim 8, wherein

the to-be-transmitted frames of the N terminal devices are downlink frames, and the N pieces of third information respectively indicate arrival moments of the to-be-transmitted frames of the N terminal devices; and/or
the to-be-transmitted frames of the N terminal devices are uplink frames, and the N pieces of third information respectively indicate the first-packet wait duration of the to-be-transmitted frames of the N terminal devices.

10. The method according to claim 8 or 9, wherein that the priorities of the N terminal devices are determined based on the quantities of to-be-transmitted frames of the N terminal devices and the first-packet wait duration of the to-be-transmitted frames of the N terminal devices comprises:
sending priorities or receiving priorities of the N terminal devices are determined based on the quantities of to-be-transmitted frames of the N terminal devices and the first-packet wait duration of the to-be-transmitted frames of the N terminal devices, wherein the sending priorities or the receiving priorities of the N terminal devices are positively correlated with the quantities of to-be-transmitted frames of the N terminal devices, and the sending priorities or the receiving priorities of the N terminal devices are positively correlated with lengths of the first-packet wait duration of the to-be-transmitted frames of the N terminal devices.

11. The method according to claim 10, wherein a sending priority or a receiving priority $p_i$ of an $i^{th}$ terminal device among the N terminal devices satisfies:

$$p_i = c_i * f\left(\frac{r_i - \overline{R}}{\overline{R}\alpha}\right) + c_i * f\left(\frac{W_i - \overline{W}}{\overline{W}\alpha}\right);$$

or

$$p_i = \frac{c_i}{\overline{c_i}} * f\left(\frac{r_i - \overline{R}}{\overline{R}\alpha}\right) + \frac{c_i}{\overline{c_i}} * f\left(\frac{W_i - \overline{W}}{\overline{W}\alpha}\right),$$

wherein
$c_i$ indicates spectral efficiency of the $i^{th}$ terminal device, $\overline{c_1}$ indicates historical average spectral efficiency of the $i^{th}$ terminal device, $r_i$ indicates a quantity of to-be-transmitted frames of the $i^{th}$ terminal device, $\overline{R}$ indicates an average value of the quantities of to-be-transmitted frames of the N terminal devices, $\alpha$ is an optimization parameter, $W_i$ indicates first-packet wait duration of the to-be-transmitted frames of the $i^{th}$ terminal device, $\overline{W}$ indicates an average value of first-packet wait duration of to-be-transmitted frames of an $N^{th}$ terminal device, $f\left(\frac{r_i - \overline{R}}{\overline{R}\alpha}\right)$ indicates a monotonically increasing function with respect to $\frac{r_i - \overline{R}}{\overline{R}\alpha}$, and $f\left(\frac{W_i - \overline{W}}{\overline{W}\alpha}\right)$ indicates a monotonically increasing function with respect to $\frac{W_i - \overline{W}}{\overline{W}\alpha}$.

12. The method according to any one of claims 1 to 11, wherein the M terminal devices are comprised in K terminal devices among the N terminal devices, and K is greater than or equal to M; and
before sending the signals to or receiving the signals from the M terminal devices among the N terminal devices based on the priorities of the N terminal devices, the method further comprises:
determining the K terminal devices based on the quantities of to-be-transmitted frames of the N terminal devices and fourth information, wherein the fourth information indicates a threshold of a quantity of to-be-transmitted frames.

13. The method according to claim 12, wherein determining the K terminal devices based on the quantities of to-be-transmitted frames of the N terminal devices and the fourth information comprises:

when a quantity of terminal devices, among the N terminal devices, whose quantities of to-be-transmitted frames are greater than the threshold is greater than or equal to a first threshold, excluding, from the N terminal devices, N-K terminal devices whose quantities of transmitted frames are ranked in the top N-K, to determine the K terminal devices; and/or

when a quantity of terminal devices, among the N terminal devices, whose quantities of to-be-transmitted frames are greater than the threshold is less than or equal to a second threshold, determining the N terminal devices as the K terminal devices.

14. The method according to claim 13, wherein a difference between N and K is 1.

15. A communication method, comprising:

determining first information, wherein the first information is used to determine a quantity of to-be-transmitted frames of a first terminal device, the first terminal device is comprised in N terminal devices, and priorities of the N terminal devices are determined based on quantities of to-be-transmitted frames of the N terminal devices; and sending the first information.

16. The method according to claim 15, wherein the to-be-transmitted frames of the first terminal device are downlink frames, and the first information indicates a quantity of transmitted frames successfully received by the first terminal device.

17. The method according to claim 16, wherein the first information comprises at least one of a hybrid automatic repeat request acknowledgement HARQ ACK, a hybrid automatic repeat request negative acknowledgement HARQ NACK, and frame satisfaction rate information, and the frame satisfaction rate information is determined based on a quantity of successfully received frames and a quantity of frames expected to be successfully received.

18. The method according to claim 15, wherein the to-be-transmitted frames of the first terminal device are uplink frames, and the first information indicates the quantity of to-be-transmitted frames of the first terminal device.

19. The method according to any one of claims 15 to 18, wherein that the priorities of the N terminal devices are determined based on the quantities of to-be-transmitted frames of the N terminal devices comprises:
sending priorities or receiving priorities of the N terminal devices are determined based on the quantities of to-be-transmitted frames of the N terminal devices, wherein the sending priorities or the receiving priorities of the N terminal devices are positively correlated with the quantities of to-be-transmitted frames of the N terminal devices.

20. The method according to any one of claims 15 to 19, wherein that the priorities of the N terminal devices are determined based on the quantities of to-be-transmitted frames of the N terminal devices comprises:

the priorities of the N terminal devices are determined based on the quantities of to-be-transmitted frames of the N terminal devices and first-packet wait duration of the to-be-transmitted frames of the N terminal devices; and the method further comprises:
sending third information, wherein the third information is used to determine first-packet wait duration of the to-be-transmitted frames of the first terminal device.

21. The method according to claim 20, wherein

the to-be-transmitted frames of the N terminal devices are downlink frames, and the third information indicates arrival moments of the to-be-transmitted frames of the first terminal device; and/or
the to-be-transmitted frames of the N terminal devices are uplink frames, and the third information indicates the first-packet wait duration of the to-be-transmitted frames of the first terminal device.

22. The method according to claim 20 or 21, wherein that the priorities of the N terminal devices are determined based on the quantities of to-be-transmitted frames of the N terminal devices and the first-packet wait duration of the to-be-transmitted frames of the N terminal devices comprises:
sending priorities or receiving priorities of the N terminal devices are determined based on the quantities of to-be-transmitted frames of the N terminal devices and the first-packet wait duration of the to-be-transmitted frames of the N terminal devices, wherein the sending priorities or the receiving priorities of the N terminal devices are positively correlated with the quantities of to-be-transmitted frames of the N terminal devices, and the sending priorities or the receiving priorities of the N terminal devices are positively correlated with lengths of the first-packet wait duration of the to-be-transmitted frames of the N terminal devices.

23. A communication apparatus, comprising a processing unit and a transceiver unit, wherein
the processing unit and the transceiver unit are configured to perform the method according to any one of claims 1 to 14, or are configured to perform the method according to any one of claims 15 to 22.

24. A communication apparatus, comprising at least one processor, wherein the at least one processor is coupled to a memory, wherein
the at least one processor is configured to perform the method according to any one of claims 1 to 14, or the processor is configured to perform the method according to any one of claims 15 to 22.

25. A communication system, comprising a communication apparatus for performing the method according to any one of claims 1 to 14 and a communication apparatus for performing the method according to any one of claims 15 to 22.

26. A computer-readable storage medium, wherein the medium stores instructions, and when the instructions are executed by a computer, the method according to any one of claims 1 to 22 is implemented.

27. A computer program product, comprising instructions, wherein when the instructions are run on a computer, the computer is enabled to perform the method according to any one of claims 1 to 22.

FIG. 1

FIG. 2

FIG. 3

**Host station/Central unit**

**User side**

Application layer

Presentation layer

Session layer

Transport layer

Network layer

Link layer

Physical layer

**An XR service is generated at the application layer**

**This algorithm runs at the link layer**

Data transmission

Application layer

Presentation layer

Session layer

Transport layer

Network layer

Link layer

Physical layer

**FIG. 4a**

User admission

Frame priority

Packet priority

**FIG. 4b**

FIG. 4c

FIG. 5a

EP 4 716 348 A1

User satisfaction rate (%)

FIG. 5b

FIG. 6

| User 1 | User 2 | gNB-A (primary base station) | User 3 | User 4 |
|---|---|---|---|---|

(1) Channel information
(2) Length of a virtual queue
(3) Wait delay of a first packet in the queue

(1) Channel information
(2) Length of a virtual queue
(3) Wait delay of a first packet in the queue

(1) Channel information
(2) Length of a virtual queue
(3) Wait delay of a first packet in the queue

(1) Channel information
(2) Length of a virtual queue
(3) Wait delay of a first packet in the queue

(3) The base station controls activation and silencing of users

(4) Calculate an average frame receiving rate of active users and an average wait delay of first packets in queues

(5) Update priorities of the users, and authorize the users based on the priorities

TO FIG. 7B

TO FIG. 7B

TO FIG. 7B

TO FIG. 7B

TO FIG. 7B

FIG. 7A

CONT.
FROM
FIG. 7A

CONT.
FROM
FIG. 7A

CONT.
FROM
FIG. 7A

CONT.
FROM
FIG. 7A

CONT.
FROM
FIG. 7A

(6) Notify the user of a
priority of silence or
transmission

(6) Notify the user of a priority of
silence or transmission

(6) Notify the user of a priority
of silence or transmission

(6) Notify the user of
a priority of silence
or transmission

(7) Transmit data

(8) Receive the data

(7) Transmit data

(9) ACK/NACK

(9) ACK/NACK

(10) Update a virtual
token queue

(10) Update a virtual
token queue

⋮

FIG. 7B

EP 4 716 348 A1

800

Communication apparatus

801

Processing unit

802

Transceiver unit

FIG. 8

900

Communication apparatus

901

Logic circuit

902

Input/Output interface

FIG. 9

FIG. 10

FIG. 11

## INTERNATIONAL SEARCH REPORT

| International application No. |
|---|
| **PCT/CN2024/083592** |

**A.     CLASSIFICATION OF SUBJECT MATTER**

H04W72/52(2023.01)i;  H04W72/12(2023.01)n

According to International Patent Classification (IPC) or to both national classification and IPC

**B.     FIELDS SEARCHED**

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

3GPP, CNTXT, ENTXTC, VEN, CNKI: 待, 将要, 传, 发, 包, 分组, 报文, 帧, 大小, 个数, 数目, 量, 多少, 等待, 时长, 时延, 等级, 第1, 第一, 首, 头, 调度, 排序, 顺序, 优先, to-be-transmi+, to-be-sen+, packet, frame, size, volume, number, quantity, waiting, time delay, first, head, schedule, order, priorit+

**C.     DOCUMENTS CONSIDERED TO BE RELEVANT**

| Category* | Citation of document, with indication, where appropriate, of the relevant passages | Relevant to claim No. |
|---|---|---|
| X | CN 102104968 A (ZTE CORP.) 22 June 2011 (2011-06-22) <br> description, paragraphs 0004-0015 and 0047-0083 | 15, 18, 23-24, 26-27 |
| Y | CN 102104968 A (ZTE CORP.) 22 June 2011 (2011-06-22) <br> description, paragraphs 0004-0015 and 0047-0083 | 1-14, 16-17, 19-22, 25 |
| Y | CN 101137196 A (POTEVIO INSTITUTE OF TECHNOLOGY CO., LTD.) 05 March 2008 (2008-03-05) <br> description, pages 11-13 | 1-14, 16-17, 19, 21-22, 25 |
| Y | CN 104619034 A (UNIVERSITY OF ELECTRONIC SCIENCE AND TECHNOLOGY OF CHINA) 13 May 2015 (2015-05-13) <br> description, paragraphs 0006-0026 | 8-11, 20-22 |
| A | CN 109548164 A (CHANGSHA UNIVERSITY) 29 March 2019 (2019-03-29) <br> entire document | 1-27 |
| A | CN 101754387 A (NTT DOCOMO INC.) 23 June 2010 (2010-06-23) <br> entire document | 1-27 |

☑ Further documents are listed in the continuation of Box C.     ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **16 May 2024** | **21 May 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/083592**

| C. | DOCUMENTS CONSIDERED TO BE RELEVANT | |
|---|---|---|
| Category* | Citation of document, with indication, where appropriate, of the relevant passages | Relevant to claim No. |
| A | CN 104955154 A (UNIVERSITY OF ELECTRONIC SCIENCE AND TECHNOLOGY OF CHINA) 30 September 2015 (2015-09-30)<br>entire document | 1-27 |
| A | CN 110461042 A (CHINA MOBILE COMMUNICATIONS GROUP CO., LTD. et al.) 15 November 2019 (2019-11-15)<br>entire document | 1-27 |

Form PCT/ISA/210 (second sheet) (July 2022)

## INTERNATIONAL SEARCH REPORT
### Information on patent family members

International application No.

**PCT/CN2024/083592**

| Patent document cited in search report | | | Publication date (day/month/year) | Patent family member(s) | | | Publication date (day/month/year) |
|---|---|---|---|---|---|---|---|
| CN | 102104968 | A | 22 June 2011 | None | | | |
| CN | 101137196 | A | 05 March 2008 | None | | | |
| CN | 104619034 | A | 13 May 2015 | None | | | |
| CN | 109548164 | A | 29 March 2019 | None | | | |
| CN | 101754387 | A | 23 June 2010 | JP | 2010141893 | A | 24 June 2010 |
| | | | | JP | 5793280 | B2 | 14 October 2015 |
| CN | 104955154 | A | 30 September 2015 | None | | | |
| CN | 110461042 | A | 15 November 2019 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310741809